# EUROPÄISCHE PATENTSCHRIFT

(11) **EP 2 809 966 B1**
(45) Veröffentlichungstag und Bekanntmachung des Hinweises auf die Patenterteilung: **16.03.2016**
(21) Anmeldenummer: 13700505.4
(22) Anmeldetag: 08.01.2013
(51) Int. Cl.: F16D 25/0638, F16D 25/12

(54) **KUPPLUNGSANORDNUNG UND DICHTELEMENT**
CLUTCH ARRANGEMENT AND SEALING ELEMENT
ENSEMBLE EMBRAYAGE ET ÉLÉMENT D'ÉTANCHÉITÉ

(30) Priorität: 02.02.2012 DE 102012201509
(43) Veröffentlichungstag der Anmeldung: 10.12.2014
(73) Patentinhaber: ZF Friedrichshafen AG, 88046 Friedrichshafen (DE)
(72) Erfinder: SCHRÖDER, Arthur, 97456 Dittelbrunn (DE); SUDAU, Jörg, 97464 Niederwerrn (DE); PITTNER, Daniel, 97218 Gerbrunn (DE); ROHM, Axel, 97453 Schonungen (DE)
(86) Internationale Anmeldenummer: PCT/EP2013/050197
(87) Internationale Veröffentlichungsnummer: WO 2013/113528

(56) Entgegenhaltungen:
- WO-A2-2008/092426
- WO-A2-2008/151694
- DE-A1-102005 021 899
- DE-A1-102008 060 580

## Beschreibung

Ausführungsbeispiele beziehen sich auf eine Kupplungsanordnung, wie sie beispielsweise bei einem Antriebsstrang eines Fahrzeugs, beispielsweise eines Kraftfahrzeugs, zum Einsatz kommen kann, sowie auf ein Dichtelement für eine solche Kupplungsanordnung.

Kupplungen werden in einer Vielzahl unterschiedlicher Ausprägungen im Fahrzeugbereich, insbesondere im Kraftfahrzeugbereich, eingesetzt. Häufig werden sie im Rahmen eines Antriebsstrangs eines entsprechenden Fahrzeugs zur Drehmomentübertragung herangezogen, wobei diese beispielsweise zwischen einem Antriebsaggregat, also beispielsweise einem Motor, und einem nachgeschalteten Getriebe verwendet werden. Hierdurch kann eine Trennung des Antriebsstrangs ermöglicht werden, sodass beispielsweise auch im Fall eines Stillstands des Fahrzeugs der Motor weiterlaufen kann. Die Kupplung trennt in diesem Fall also die sich drehende Motorausgangswelle von einer stillstehenden Getriebeeingangswelle.

Kupplungen können jedoch auch bei anderen Konstellationen im Antriebsstrang eines Fahrzeugs eingesetzt werden. So können sie beispielsweise im Falle von Hybridantrieben auch zwischen unterschiedlichen Antriebsaggregaten oder zur Trennung des Drehmomentflusses vor oder hinter einem Getriebe zum Einsatz kommen. Kupplungen können darüber hinaus im Zusammenhang mit unterschiedlichen Antriebsaggregattechnologien, also beispielsweise Verbrennungsmotoren und Elektromotoren, sowie im Zusammenhang mit verschiedenen Getriebetechniken, also beispielsweise synchronisierten, aber auch unsynchronisierten Getrieben verwendet werden. Als Getriebe können hierbei sowohl manuell geschaltete Getriebe, wie auch Automatikgetriebe verwendet werden, bei denen gegebenenfalls über elektrische, elektronische oder andere Steuerimpulse manuelle Gangwechsel einleitbar sein können.

Kupplungen basieren hierbei häufig auf der Schaffung eines reibschlüssigen Kontakts zwischen entsprechenden Bauteilen, die mit einem Antriebsbauteil und einem Abtriebsbauteil der betreffenden Kupplung gekoppelt sind. Gerade im Fall stark unterschiedlicher Drehzahlen, wie sie beispielsweise beim Anfahren auftreten können, wird hierbei im Bereich der Reibflächen aufgrund der vorherrschenden Schlupfbedingungen Energie in Wärme umgesetzt. Diese kann zu einer unerwünschten Aufheizung der betreffenden Reibflächen oder auch der betreffenden Bauteile führen. Unter anderem aus diesem Grund werden daher beispielsweise Kupplungen verwendet, bei denen in einem Inneren eines Gehäuses ein flüssiges Medium zirkuliert, welches zumindest teilweise die an den Reibflächen generierte Wärme von diesen abführt.

So bezieht sich die DE 10 2009 016 414 A1 auf eine Kupplungsanordnung, bei der in einem Gehäuse eine entsprechende Fluidströmung aufgebaut wird, indem an einem Reibelement schaufelförmige Förderflächen vorgesehen sind. Auch die DE 101 25 628 A1 bezieht sich auf eine Kupplungsanordnung, bei der wenigstens ein Reiborgan zur Erzeugung einer die Reiborgane wenigstens bereichsweise umströmenden Fluidzirkulation ausgebildet ist, wobei über die Reiborgane die Drehmomentübertragung erfolgt.

Die DE 10 2009 042 065 A1 bezieht sich darüber hinaus auf eine Kraftübertragungsvorrichtung für den Einsatz in Antriebssträngen von Fahrzeugen, bei der eine Federeinheit, die als Blattfeder, Tellerfeder oder auch in Form einer elastischen Membran ausgeführt sein kann, eine axiale Vorspannung eines Kolbenelements bewirkt, wenn das Kolbenelement sich in einem drucklosen Zustand befindet.

Die WO 2008/151694 A2 bezieht sich auf eine Kupplungshauptnabe und eine Doppelkupplung mit einer entsprechenden Kupplungshauptnabe. Die DE 10 2008 060 580 A1 beschreibt eine Mehrfach-Kupplungseinrichtung mit zwei Druckausgleichsräumen. Die WO 2008/092426 A2 beschreibt einen Antriebsstrang mit nasser Anfahrkupplung für Hybridanwendungen und die DE 10 2005 021 899 A1 eine Kupplung.

Ausgehend hiervon besteht daher ein Bedarf daran, eine Verbesserung einer Schaltbarkeit einer Kupplungsanordnung zu ermöglichen, deren Reibflächen während eines Betriebs der Kupplungsanordnung einem flüssigen Medium ausgesetzt sind.

Diesem Bedarf tragen eine Kupplungsanordnung gemäß Patentanspruch 1 und ein Dichtelement gemäß Patentanspruch 14 Rechnung.

Eine Kupplungsanordnung, beispielsweise für einen Antriebsstrang eines Fahrzeugs, gemäß einem Ausführungsbeispiel umfasst eine erste Reibfläche und eine zweite Reibfläche, die mit einem Abtriebsbauteil der Kupplungsanordnung im Wesentlichen drehfest gekoppelt ist. Die erste und die zweite Reibfläche sind hierbei derart ausgebildet und angeordnet, um miteinander in einen Reibeingriff bringbar zu sein, um ein Drehmoment von der ersten Reibfläche auf die zweite Reibfläche übertragbar zu machen, wobei die erste und die zweite Reibfläche ferner ausgebildet sind, um während eines Betriebs der Kupplungsanordnung einem flüssigen Medium ausgesetzt zu sein. Die Kupplungsanordnung umfasst ferner ein Anpresselement, das ausgebildet ist, um auf eine Betätigung hin den Reibeingriff durch ein Bewirken einer Kraft entlang einer Kraftrichtung zu schaffen oder zu trennen. Die Kupplungsanordnung umfasst ferner ein Dichtelement, das ein erstes Volumen, in dem die erste und die zweite Reibfläche angeordnet sind, von einem zweiten Volumen trennt, wobei das Dichtelement entlang der Kraftrichtung zwischen dem Anpresselement und einem Gehäuse der Kupplungsanordnung angeordnet ist, um eine Änderung eines Drucks in dem zweiten Volumen während des Betriebs der Kupplungsanordnung zu reduzieren. Das Gehäuse der Kupplungsanordnung stellt hierbei häufig ein Antriebsbauteil derselben dar, über das das zu übertragende Drehmoment an die Kupplungsanordnung übertragbar ist bzw. übertragen werden kann.

Einem Ausführungsbeispiel liegt so die Erkenntnis zugrunde, dass eine Schaltbarkeit einer Kupplungsanordnung dadurch verbessert werden kann, indem das Dichtelement, welches das erste von dem zweiten Volumen trennt, gerade entlang der Kraftrichtung zwischen dem Anpresselement und dem Gehäuse der Kupplungsanordnung angeordnet ist, sodass aufgrund einer in dem Gehäuse gegebenenfalls während des Betriebs vorherrschenden Strömung des flüssigen Mediums eine Druckänderung in dem zweiten Volumen reduziert wird, gegebenenfalls sogar unterbunden werden kann. So kann beispielsweise auch bei einer Kupplungsanordnung, bei der ein Strom des flüssigen Mediums, also beispielsweise eines Öls, zur Kühlung der ersten und zweiten Reibfläche verwendet wird, ein durch diesen Strom bewirkter, hydrodynamischer Druckabfall an dem Anpresselement reduziert, gegebenenfalls sogar vollständig unterbunden werden. Damit können gegebenenfalls auch Änderungen von auf das Anpresselement und damit auf die Reibflächen einwirkenden Kräfte reduziert oder sogar vollständig unterbunden werden kann, die durch eine Änderung des Stroms des flüssigen Mediums bewirkt werden.

Hierbei wird unter einer im Wesentlichen drehfesten Kopplung eine solche verstanden, bei der die betreffenden Bauteile drehfest oder derart miteinander drehend gekoppelt sind, dass diese sich im Wesentlichen miteinander drehen, wobei jedoch gegebenenfalls auftretende relative Verdrehungen zwischen den beteiligten Bauteilen auf einen vorbestimmten Winkelbereich begrenzt sind. Eine solche Variation des Winkelbereichs kann beispielsweise aufgrund mechanischer Deformationen der beteiligten Bauteile, aufgrund geometrischer Verhältnisse oder aufgrund ähnlicher Effekte zurückzuführen sein. Eine im Wesentlichen drehfeste Verbindung zweier Komponenten umfasst daher ebenso eine drehfeste Verbindung.

Bei einer solchen Kupplungsanordnung gemäß einem Ausführungsbeispiel kann so das zweite Volumen mit einem Zuleitungskanal für das flüssige Medium oder ein weiteres flüssiges Medium gekoppelt sein, um einen Zufluss oder einen Abfluss des flüssigen Mediums oder eines weiteren flüssigen Mediums bei einer Betätigung des Anpresselements zu ermöglichen. Das Dichtelement kann also hierbei derart ausgebildet und angeordnet sein, dass auch bei einer Betätigung des Anpresselements eine Änderung des Drucks in dem zweiten Volumen während des Betriebs der Kupplungsanordnung reduziert wird, gegebenenfalls auch vollständig unterbunden wird, sodass der Druck beispielsweise in dem zweiten Volumen im Wesentlichen unverändert oder konstant bleibt.

Bei einer Kupplungsanordnung gemäß einem Ausführungsbeispiel kann das Anpresselement ausgebildet sein, um die Kraft entlang der Kraftrichtung durch ein Bewegen entlang der Kraftrichtung zu bewirken. Das Dichtelement kann entsprechend verformbar ausgestaltet sein, sodass dieses einer Bewegung des Anpresselements entlang der Kraftrichtung durch eine Deformation desselben nachgeben kann. Bei einer solchen Kupplungsanordnung gemäß einem Ausführungsbeispiel kann so das Dichtelement eine Bewegung des Anpresselements entlang der Kraftrichtung aufnehmen bzw. kompensieren. Hierdurch kann es gegebenenfalls möglich sein, die Trennfähigkeit der Kupplungsanordnung dadurch zu verbessern, dass diese in einem offenen bzw. getrennten Zustand eine geringere Reibung zwischen den Reibflächen aufweist, da die Reibflächen aufgrund der Beweglichkeit des Anpresselements entlang der Kraftrichtung sich gegebenenfalls besser voneinander trennen lassen. Ergänzend oder alternativ kann es gegebenenfalls möglich sein, auch ein Einkuppeln der Kupplungsanordnung, also ein Schaffen des Reibschlusses kontrollierter durchzuführen, da aufgrund der Beweglichkeit des Anpresselements entlang der Kraftrichtung ein sanfteres Einkuppeln bzw. ein sanfteres Schaffen des Reibschlusses möglich sein kann.

Bei einer Kupplungsanordnung gemäß einem Ausführungsbeispiel kann das zweite Volumen wenigstens teilweise von einem Flächenabschnitt des Anpresselements begrenzt werden. Eine solche Fläche kann beispielsweise im Wesentlichen senkrecht zu der Kraftrichtung angeordnet sein. Der Flächenabschnitt kann hierbei an einer dem Gehäuse zugewandten Seite des Anpresselements liegen. Gerade bei einer solchen Anordnung kann der Einsatz des Dichtelements von Vorteil sein, da eine im Inneren des Gehäuses erzeugte Strömung, die zu Änderungen der Druckverhältnisse führen kann, eine entsprechende Krafteinwirkung auf den Flächenabschnitt des Anpresselements hervorrufen kann, wobei die Krafteinwirkung jedoch durch den Einsatz eines Dichtelements reduziert, wenn nicht sogar vollständig unterbunden werden kann.

Bei einer solchen Kupplungsanordnung gemäß einem Ausführungsbeispiel kann sich an einer dem zweiten Volumen abgewandten Seite des Anpresselements ein Kolbendruckraum anschließt, wobei sich eine Erstreckung des Flächenabschnitts des Anpresselements entlang einer radialen Richtung der Kupplungsanordnung von einer Erstreckung des Kolbendruckraums entlang der radialen Richtung um höchstens 30 % der größeren Erstreckung des Flächenabschnitts des Anpresselements und des Kolbendruckraums unterscheiden kann. Gerade bei einer solchen Anordnung kann der Einsatz des Dichtelements von Vorteil sein. So kann beispielsweise aufgrund einer auf das flüssige Medium einwirkenden Zentrifugalkraft eine Druckveränderung entstehen, die auf den Flächenabschnitt des Anpresselements wirkt. Da die Zentrifugalkraft ebenso in dem Kolbendruckraum vorherrscht, kann es daher ratsam sein, ein Einwirken von zentrifugalkraftbedingten Druckveränderungen auf vergleichbare Flächen wirken zu lassen. Hierdurch kann ein gegebenenfalls vollständige Kompensation, gegebenenfalls aber auch eine Unter- oder Überkompensation erzielbar sein. Unabhängig hiervon kann es jedoch ratsam sein, den oben genannten Unterschied auf höchstens 25 %, höchstens 20 %, höchstens 15 %, höchstens 10 % oder höchstens 5 % zu beschränken, um die auftretenden Kraftunterschiede zu begrenzen.

Bei einer Kupplungsanordnung gemäß einem Ausführungsbeispiel kann das Anpresselement derart ausgebildet sein, dass die Kraftrichtung einer Richtung einer Drehachse der Kupplungsanordnung entspricht. Anders ausgedrückt kann das Dichtelement zwischen dem Anpresselement und dem Gehäuse entlang der Drehachse der Kupplungsanordnung angeordnet sein, wobei es sich bei der Drehachse um eine Drehachse im mathematischen Sinn, also beispielsweise um eine axiale Richtung der Kupplungsanordnung, handelt. So können bei einer Kupplungsanordnung gemäß einem Ausführungsbeispiel die Komponenten der Kupplungsanordnung im Wesentlichen rotationssymmetrisch bezüglich der Drehachse ausgelegt sein, wobei die Drehachse der Kupplungsanordnung auch eine gemeinsame Drehachse der Komponenten darstellen kann.

Bei einer Kupplungsanordnung gemäß einem Ausführungsbeispiel kann das Dichtelement ferner ausgebildet sein, um eine Kraft derart auf das Anpresselement auszuüben, dass das Anpresselement durch die Kraft auf eine Ausgangslage vor einer Betätigung desselben zu versetzt wird. Das Dichtelement kann so ferner optional ausgebildet sein, um eine solche Kraft auf das Anpresselement auszuüben, um ohne die Betätigung das Anpresselement in eine Ausgangslage vor einer Betätigung desselben zu versetzen. Anders ausgedrückt kann das Dichtelement ausgebildet sein, um als Membran-, Teller- oder Blattfederelement in der Kupplungsanordnung zu dienen. Hierdurch kann es gegebenenfalls möglich sein, bei einer solchen Kupplungsanordnung ein separates Federelement einzusparen, was - je nach konkreter Implementierung der Kupplungsanordnung - zum Trennen oder zum Schaffen des Reibschlusses in der Ausgangslage herangezogen wird. Das Dichtelement kann so die Funktion eines solchen Federelements übernehmen. Hierdurch kann also nicht nur das Dichtelement zwei Funktionen übernehmen, es kann vielmehr auch eine Herstellung einer solchen Kupplungsanordnung vereinfacht werden, da gegebenenfalls ein Bauteil einsparbar sein kann.

Eine Kupplungsanordnung gemäß einem Ausführungsbeispiel kann ferner ein Förderbauteil in dem ersten Volumen umfassen, das mit dem Gehäuse, also bei manchen Ausführungsbeispielen mit dem Antriebsbauteil, im Wesentlichen drehfest gekoppelt und ausgebildet ist, um einen Strom des flüssigen Mediums bei einer Drehung relativ zu dem flüssigen Medium zu bewirken. Gerade bei einer solchen Kupplungsanordnung gemäß einem Ausführungsbeispiel kann der Einsatz des Dichtelements besonders vorteilhaft sein, da durch das Vorsehen des Förderbauteils eine Pumpwirkung in dem ersten Volumen bei einer Relativbewegung zu dem flüssigen Medium geschaffen wird. So kann es aufgrund des Förderbauteils und des durch das Förderbauteil bewirkten Stroms zu einem Abfall des Drucks in dem ersten Volumen kommen. In einem solchen Fall schützt gerade das Dichtelement bei einem Ausführungsbeispiel einer Kupplungsanordnung vor einem durch einen solchen Druckabfall in dem ersten Volumen bewirkten Druckabfall in dem zweiten Volumen, sodass auch bei einem entsprechenden Vorliegen eines Stroms, also bei einer entsprechenden Förderleistung des Förderbauteils die Schaltbarkeit der Kupplungsanordnung verbessert wird.

Bei einer Kupplungsanordnung gemäß einem Ausführungsbeispiel kann so das Dichtelement einen scheibenförmigen ersten Abschnitt mit einer ersten Dichtfläche und einen scheibenförmigen zweiten Abschnitt mit einer zweiten Dichtfläche aufweisen, wobei der erste Abschnitt und der zweite Abschnitt durch einen Übergangsabschnitt miteinander verbunden sind. Durch das Vorsehen entsprechender erster und zweiter Dichtflächen kann so gegenüber beispielsweise anderer Implementierungen eine Dichtwirkung und damit eine fluidtechnische Dichtung verbessert werden, da durch das Vorsehen von zweidimensionalen Dichtflächen eine Wahrscheinlichkeit eines Bildens eines Kanals, durch den das flüssige Medium von dem ersten Volumen in das zweite Volumen oder in umgekehrter Richtung treten kann, reduziert wird. Bei einem solchen Ausführungsbeispiel einer Kupplungsanordnung können die erste und die zweite Dichtfläche im Wesentlichen parallel und senkrecht zu der Drehachse der Kupplungsanordnung ausgerichtet sein. Anders ausgedrückt können die erste und die zweite Dichtfläche bei einem solchen Ausführungsbeispiel parallel zu einer Ebene liegen, die durch eine radiale Richtung, die von der Drehachse der Kupplungsanordnung weg weist, und einer zu diesen beiden Richtungen senkrechten Umfangsrichtung oder tangentialen Richtung der Kupplungsanordnung liegen.

Bei einer solchen Kupplungsanordnung gemäß einem Ausführungsbeispiel kann die erste Dichtfläche und/oder die zweite Dichtfläche entlang einer radialen Richtung, also senkrecht von der Drehachse weg weisend, eine Ausdehnung aufweisen, die wenigstens 5 % einer Ausdehnung des Übergangsabschnitts entlang der radialen Richtung entspricht. Alternativ oder ergänzend kann bei einer solchen Kupplungsanordnung die erste Dichtfläche und/oder die zweite Dichtfläche entlang der radialen Richtung auch eine Ausdehnung aufweisen, die größer als eine Ausdehnung des Übergangsabschnitts entlang der radialen Richtung ist. Die erste und/oder die zweite Dichtfläche können so gegebenenfalls hinsichtlich ihrer Dichtwirkung durch eine entsprechende Ausgestaltung ihrer Flächengrößen weiter verbessert werden. So kann es gegebenenfalls möglich sein, im erstgenannten Fall auch wenigstens 10 %, wenigstens 30 %, wenigstens 50 % oder wenigstens 75 % der Ausdehnung des Übergangsabschnitts entlang der radialen Richtung vorzusehen.

Je nach konkreter Ausgestaltung des Dichtelements kann hierbei der Übergangsabschnitt beispielsweise zur Bewirkung der Federwirkung, wie sie zuvor beschrieben wurde, herangezogen werden. Unabhängig hiervon kann es jedoch auch bei einer entsprechenden Deformation des Dichtelements zu einer Deformation der ersten und/oder der zweiten Dichtfläche kommen.

Bei einer solchen Kupplungsanordnung gemäß einem Ausführungsbeispiel kann die erste Dichtfläche beispielsweise mit einem ringförmigen Oberflächenabschnitt des Gehäuses, des Antriebsbauteils und/oder eines anderen Abstützbauteils und die zweite Dichtfläche mit einem ringförmigen Oberflächenabschnitt des Anpresselements in Kontakt stehen. Je nach konkreter Implementierung kann es sich bei dem Gehäuse, dem Antriebsbauteil und dem Abstützbauteil auch um ein und dasselbe Bauteil handeln.

Bei einer solchen Kupplungsanordnung können die erste und die zweite Dichtfläche entlang einer radialen Richtung zueinander versetzt sein. Ergänzend oder alternativ können diese auch entlang der Drehachse der Kupplungsanordnung versetzt zueinander angeordnet sein. Hierdurch kann es gegebenenfalls möglich sein, die Dichtwirkung des Dichtelements dadurch weiter zu verbessern, dass aufgrund der beschriebenen geometrischen Ausgestaltungen besonders kleine Knickradien bzw. Biegeradien im Bereich des Dichtelements vermeidbar sind, an denen gegebenenfalls besonders hohe Kräfte im Inneren des Materials des Dichtelements bzw. an seiner Oberfläche auftreten. Gerade hohe Kräfte können zu einer stärkeren Deformation des Dichtelements führen, wodurch ein Anliegen der Dichtflächen an den Oberflächenabschnitten der betreffenden Gegenbauteile beeinträchtigt werden könnte. Auch kann gegebenenfalls eine Materialermüdung im Bereich der kleinen Biegeradien auftreten, was zu einer reduzierten Lebensdauer der Kupplungsanordnung führen könnte. So kann gegebenenfalls eine Dichtwirkung des Dichtelements und/oder eine Lebensdauer des Dichtelements weiter verbessert werden.

Bei einer Kupplungsanordnung gemäß einem Ausführungsbeispiel kann das Dichtelement einstückig ausgebildet sein. Das Dichtelement kann in diesem Fall also aus genau einem zusammenhängenden Materialstück gefertigt sein, weshalb die Begriffe "einstückig ausgebildet", "integral" und "einteilig" auch synonym verwendet werden können. Hierdurch kann es gegebenenfalls möglich sein, die Herstellung des Dichtelements und damit der Kupplungsanordnung zu vereinfachen.

Bei einer Kupplungsanordnung gemäß einem Ausführungsbeispiel kann das Dichtelement durch ein Umformen eines blechartigen Werkstücks, durch ein spanabhebendes oder ein gusstechnisches Herstellungsverfahren hergestellt werden. So kann bei einem Ausführungsbeispiel einer Kupplungsanordnung das Dichtelement gegebenenfalls mit Hilfe eines vergleichsweise einfachen und kostengünstigen Herstellungsverfahrens hergestellt werden, wie etwa dem Umformen eines blechartigen Werkstücks, wodurch sich ein Herstellungsaufwand im Vergleich zu anderen Herstellungsverfahren gegebenenfalls erheblich reduzieren lässt. Andererseits kann es gegebenenfalls ebenso ratsam und interessant sein, das Dichtelement mit Hilfe aufwendigerer Herstellungsverfahren herzustellen, beispielsweise einem spanabhebenden oder einem gusstechnischen Herstellungsverfahren, wenn das Dichtelement ein solches Herstellungsverfahren beispielsweise aufgrund besonderer zu erwartender Belastungen sinnvoll erscheinen lässt.

Bei einer Kupplungsanordnung gemäß einem Ausführungsbeispiel kann das Dichtelement im Wesentlichen drehfest, beispielsweise durch eine Nietverbindung und/oder eine Steckverbindung mit dem Gehäuse verbunden und ausgebildet sein, um eine im Wesentlichen drehfeste Verbindung zwischen dem Gehäuse und einem weiteren Bauteil zu schaffen. Hierdurch kann es möglich sein, mit Hilfe des Dichtelements eine Drehbewegung des Gehäuses, also beispielsweise des Antriebsbauteils, auf das weitere Bauteil, beispielsweise eine Komponente des Anpresselements oder ein mit dem Anpresselement verbundenes Bauteil, zu übertragen. Hierdurch kann es gegebenenfalls möglich sein, ein eine entsprechende Drehbewegung übertragendes Bauteil einzusparen und so nicht nur die Konstruktion der Kupplungsanordnung zu vereinfachen, sondern auch gegebenenfalls ihren Bauraum zu reduzieren.

Bei einer solchen Kupplungsanordnung kann das Dichtelement eine Mehrzahl von Blattfederelementen aufweisen, die mit dem weiteren Bauteil der Kupplungsanordnung formschlüssig, beispielsweise durch eine Nietverbindung und/oder eine Steckverbindung, verbunden sind, um die im Wesentlichen drehfeste Verbindung zwischen dem weiteren Bauteil und dem Gehäuse zu schaffen. Die Verwendung von Blattfederelementen kann hierbei aufgrund ihrer blattförmigen Ausgestaltung eine Verschiebung des weiteren Bauteils entlang der Drehachse, also eine Bewegung desselben entlang der axialen Richtung der Kupplungsanordnung, ermöglichen, während senkrecht zu der Drehachse Kräfte übertragbar sind. So können insbesondere tangential wirkende Kräfte, die ein Drehmoment hervorrufen, mit Hilfe der entsprechenden Blattfederelemente übertragen werden. Darüber hinaus kann die Verwendung von Blattfederelementen gerade bei einem aus einem blechartigen Werkstück hergestellten Dichtelement und/oder bei einem einstückigen Dichtelement eine Integration der Funktionalität der Übertragung eines Drehmoments auf das weitere Bauteil auch mit konstruktiv einfachen Mitteln ermöglichen. Bei einem solchen Ausführungsbeispiel einer Kupplungsanordnung können so die Blattfederelemente beispielsweise einteilig mit dem Dichtelement geformt sein.

Ein Dichtelement für eine Kupplungsanordnung gemäß einem Ausführungsbeispiel umfasst so einen scheibenförmigen ersten Abschnitt, der eine erste Dichtfläche umfasst, einen scheibenförmigen zweiten Abschnitt, der eine zweite Dichtfläche umfasst, und einen Übergangsabschnitt, der den ersten Abschnitt und den zweiten Abschnitt miteinander verbindet, wobei die erste Dichtfläche ausgebildet ist, um mit einem ringförmigen ersten Oberflächenabschnitt eines Bauteils und die zweite Dichtfläche mit einem ringförmigen zweiten Oberflächenabschnitt des Bauteils oder eines anderen Bauteils in Kontakt zu stehen. Das Dichtelement kann also ausgebildet sein, um eine fluidtechnische Dichtung zu schaffen. Es kann ebenso ausgebildet sein, um eine Kraft derart auf ein Anpresselement der Kupplungsanordnung auszuüben, dass das Anpresselement durch die Kraft auf eine Ausgangslage vor einer Betätigung desselben zu versetzt wird, um einen Reibschluss zur Drehmomentübertragung zwischen der ersten und der zweiten Reibfläche zu schaffen oder zu trennen. Anders ausgedrückt kann das Dichtelement also ausgebildet sein, um eine fluidtechnische Dichtung zu schaffen, und um als Membran-, Teller- oder Blattfederelement in der Kupplungsanordnung, beispielsweise für einen Antriebsstrang eines Fahrzeugs, zu dienen.

Hierbei kommt eine kraftschlüssige Verbindung durch Haftreibung, eine stoffschlüssige Verbindung durch molekulare oder atomare Wechselwirkungen und Kräfte und eine formschlüssige Verbindung durch geometrische Verbindung der betreffenden Verbindungspartner zustande. Die Haftreibung setzt somit insbesondere eine Normalkraftkomponente zwischen den beiden Verbindungspartnern voraus.

Nachfolgend werden unter Bezugnahme auf die beigefügten Figuren Ausführungsbeispiele näher beschrieben und erläutert.
Fig. 1 zeigt eine Querschnittsdarstellung durch eine Kupplungsanordnung gemäß einem Ausführungsbeispiel;
Fig. 2 zeigt eine perspektivische Darstellung eines Förderbauteils einer Kupplungsanordnung gemäß einem Ausführungsbeispiel;
Fig. 3 zeigt eine perspektivische Darstellung eines Dichtelements gemäß einem Ausführungsbeispiel, wie es bei einer Kupplungsanordnung gemäß einem Ausführungsbeispiel zum Einsatz kommen kann;
Fig. 4 zeigt eine Querschnittsdarstellung des in Fig. 3 gezeigten Dichtelements;
Fig. 5 zeigt eine Querschnittsdarstellung durch eine weitere Kupplungsanordnung gemäß einem Ausführungsbeispiel;
Fig. 6 zeigt eine perspektivische Darstellung eines weiteren Dichtelements gemäß einem Ausführungsbeispiel, wie es beispielsweise bei der in Fig. 5 gezeigten Kupplungsanordnung gemäß einem Ausführungsbeispiel verwendet werden kann;
Fig. 7 zeigt eine weitere perspektivische Darstellung des in Fig. 6 gezeigten Dichtelements; und
Fig. 8 zeigt eine Querschnittsdarstellung durch das in den Fig. 6 und 7 gezeigte Dichtelement.

Bei der nachfolgenden Beschreibung der beigefügten Figuren, die Ausführungsformen der vorliegenden Erfindung zeigen, bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

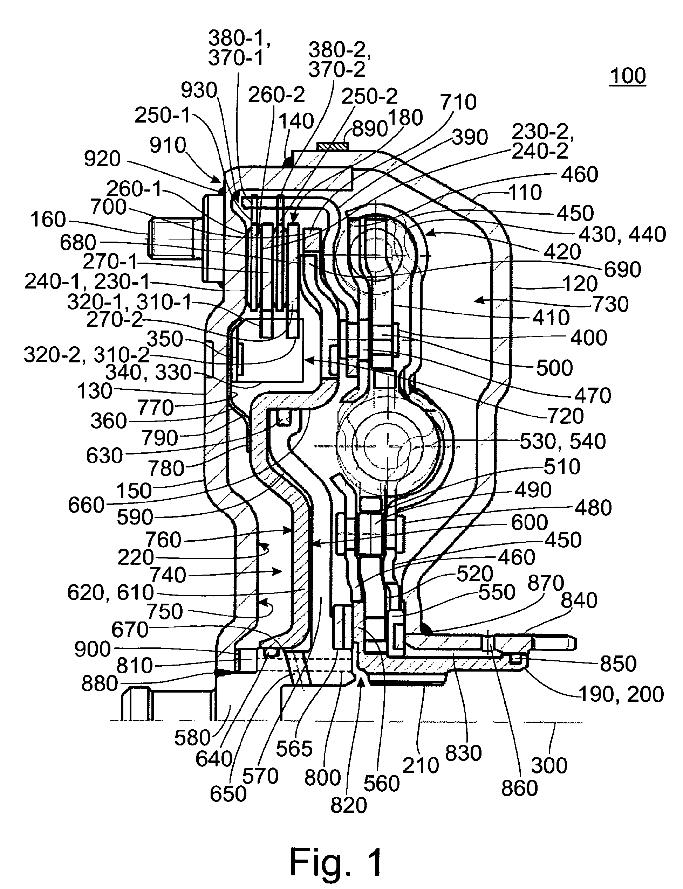

Fig. 1 zeigt eine Querschnittsdarstellung einer Kupplungsanordnung 100 gemäß einem Ausführungsbeispiel. Die Kupplungsanordnung 100 kann hierbei beispielsweise im Rahmen eines Antriebsstrangs eines Fahrzeugs zum Einsatz kommen, um beispielsweise ein von einem Antriebsaggregat bereitgestelltes Drehmoment an ein Getriebe oder ein anderes Bauteil trennbar weiterzugeben. Die Kupplungsanordnung 100 kann daher beispielsweise als Trennkupplung im Falle einer Kombination mit einem synchronisierten Getriebe oder auch als Anfahrkupplung im Zusammenspiel mit einem unsynchronisierten Getriebe, beispielsweise einem entsprechenden Automatikgetriebe, verwendet werden.

Die Kupplungsanordnung 100 umfasst so ein Gehäuse 110, welches im vorliegenden Fall als zweiteiliges Gehäuse mit einer ersten Gehäuseschale 120 und einer zweiten Gehäuseschale 130 ausgeführt ist, wobei die zweite Gehäuseschale 130 auch als motorseitiger Deckel der Kupplungsanordnung 100 bezeichnet wird. Die beiden Gehäuseschalen 120, 130 sind hierbei über eine Schweißverbindung 140 miteinander verbunden. Das Gehäuse 110 ist so mit einem flüssigen Medium befüllbar bzw. befüllt, bei dem es sich beispielsweise um ein Öl oder eine andere Flüssigkeit handelt, die geeignet ist, im Inneren des Gehäuses 110 entstehende Wärme aufzunehmen und abzutransportieren.

Die zweite Gehäuseschale 130 und damit das Gehäuse 110 dienen bei der in Fig. 1 gezeigten Kupplungsanordnung 100 als Antriebsbauteil 150. Zu diesem Zweck weist die zweite Gehäuseschale 130 eine Anschweißschraube 160 zum Befestigen an einer Flexplatte oder einem Schwungrad eines Antriebsaggregats, beispielsweise eines Motors, oder einer anderen Komponente des Antriebsstrangs auf. Alternativ kann anstelle der Anschweißschraube 160 auch ein Zapfen oder eine andere Befestigungsstruktur zum Befestigen der Kupplungsanordnung 100 implementiert werden.

Bei der in Fig. 1 gezeigten Kupplungsanordnung 100 handelt es sich genauer gesagt um eine Mehrscheiben- bzw. Mehrlamellenkupplung. Entsprechend weist die Kupplungsanordnung 100 in einem Innenraum des Gehäuses 110 ein Reibpaket 180 auf, das eine Mehrzahl von ersten Reibflächen 230 und zweiten Reibflächen 240 aufweist, wobei die ersten Reibflächen über nachfolgend beschriebene Komponenten wenigstens im Wesentlichen drehfest mit dem Antriebsbauteil 150 bzw. dem Gehäuse 110 und die zweiten Reibflächen 240 wenigstens im Wesentlichen drehfest mit einem Abtriebsbauteil 190 der Kupplungsanordnung gekoppelt sind. Bei dem Abtriebsbauteil 190 handelt es sich genauer gesagt um eine untere Nabe 200, die über eine Innenverzahnung 210 formschlüssig mit einer in Fig. 1 nicht gezeigten Getriebeeingangswelle koppelbar ist. Die Getriebeeingangswelle weist eine der Innenverzahnung 210 entsprechende Außenverzahnung auf.

Bei dem in Fig. 1 gezeigten Ausführungsbeispiel einer Kupplungsanordnung 100 umfasst das Reibpaket 180 eine an einer Innenfläche 220 des Gehäuses 110 bzw. der zweiten Gehäuseschale 130 gebildete erste Reibfläche 230-1, die mit einer entsprechenden zweiten Reibfläche 240-1 einer Außenlamelle 250-1 in Reibeingriff steht bzw. in einen solchen bringbar ist. Die Außenlamelle 250 ist hierbei mit einem Reibbelag 260-1 beschichtet, an der die zweite Reibfläche 240-1 gebildet ist. Im Unterschied hierzu ist die erste Reibfläche 230-1 direkt an der Innenfläche 220 des Gehäuses 110 gebildet, ist also beispielsweise als Stahloberfläche ausformt, wenn das Gehäuse 110 ebenfalls aus Stahl gefertigt ist.

Die Außenlamelle 250-1 weist an einer der Innenfläche 220 abgewandten Seite einen weiteren Reibbelag 260-2 auf, der an einer Oberfläche eine weitere zweite Reibfläche 240-2 ausbildet. Die zweite Reibfläche 240-2 steht mit einer Innenlamelle 270-1 in Reibeingriff bzw. kann mit dieser über eine entsprechende erste Reibfläche 230-2 in Reibeingriff gebracht werden.

Das Reibpaket 180 weist ferner eine weitere Außenlamelle 250-2 und eine weitere Innenlamelle 270-2 auf, wobei die Außenlamelle 250-2 ebenfalls entsprechende Reibbeläge 260 aufweist, die jedoch der Übersichtlichkeit halber in Fig. 1 ebenso wenig mit Bezugszeichen versehen sind, wie die sich entsprechend ergebenden ersten und zweiten Reibflächen 230, 240. Die Außenlamelle 250-2 ist hierbei zwischen den beiden Innenlamellen 270-1 und 270-2 angeordnet. Das Reibpaket 180 wird an einer der Innenfläche 220 des Gehäuses 110 abgewandten Seite somit durch die Innenlamelle 270-2 begrenzt.

Die Innenlamellen 270 sind hierbei als im Wesentlichen scheibenförmige Stahlbauteile implementiert und stellen entsprechende, wenigstens abschnittsweise scheibenförmige Bauteile dar, an denen im Bereich der scheibenförmigen Abschnitte die ersten Reibflächen 230 angeordnet sind. Auch die Außenlamellen 250 sind mit Hilfe ihrer Reibbeläge 260 als wenigstens abschnittsweise scheibenförmige Bauteile implementiert, die an ihren scheibenförmigen Abschnitten die zweiten Reibflächen 240 aufweisen. Selbstverständlich können bei anderen Ausführungsbeispielen auch die Reibbeläge 260 an den jeweils anderen Bauteilen vorgesehen sein.

Sowohl die Innenlamellen 270 wie auch die Außenlamellen 250 weisen bezogen auf eine Drehachse 300 jeweils eine zentrale Ausnehmung auf, wobei sowohl die Innenlamellen 270 wie auch die Außenlamellen 250 gerade um die Drehachse 300 herum drehbar angeordnet sind. Die Drehachse 300 stellt daher auch im mathematischen Sinn die Drehachse der Kupplungsanordnung 100 dar und wird auch als axiale Richtung bezeichnet.

Um eine Drehmomentübertragung von dem als Antriebsbauteil 150 dienenden Gehäuse 110 an die Innenlamellen 270 zu ermöglichen, weisen diese jeweils einen Abschnitt 310-1, 310-2 auf, an denen an einer Seitenfläche jeweils eine Mitnehmerfläche 320-1, 320-2 ausgebildet ist, über die die Innenlamellen 270 jeweils mit einer Förderfläche 330 eines Förderbauteils 340 derart in Eingriff stehen, sodass bei einer Drehung des Förderbauteils 340 auch die jeweiligen Innenlamellen 270 in eine Drehung versetzt werden. Das Förderbauteil 340 ist hierbei im Wesentlichen ringförmig ausgestaltet und erstreckt sich um die Drehachse 300 herum entlang eines Umfangs der Kupplungsanordnung 100. Das Förderbauteil 340 ist bei dem in Fig. 1 gezeigten Ausführungsbeispiel im Wesentlichen mäanderförmig ausgestaltet, sodass die Förderflächen 330 im Wesentlichen senkrecht zu einer Umfangsrichtung der Kupplungsanordnung 100, also im Wesentlichen senkrecht zu einer tangentialen Richtung verlaufen, wobei die tangentiale Richtung senkrecht auf der Drehachse 300 und einer in der entsprechenden Querschnittsebene von der Drehachse 300 weg weisenden radialen Richtung steht.

Das Förderbauteil 340 weist hierbei genauer gesagt eine Mehrzahl der Förderflächen 330 auf. Diese sind entlang des Umfangs des Förderbauteils 340 beispielsweise regelmäßig angeordnet. Entsprechend weisen auch die Abschnitte 310 der Innenlamellen 270 eine entsprechende Anzahl von Mitnehmerflächen 320 auf, mit denen die Mehrzahl der Förderflächen 330 in Eingriff stehen. Das Förderbauteil 340 und die Abschnitte 310 der Innenlamellen 270 bilden so Verzahnungen, die ineinandergreifen. Hierdurch kann eine Verteilung des zu übertragenden Drehmoments auf eine größere Anzahl von Förderflächen 330 und Mitnehmerflächen 320 erzielt werden, sodass es gegebenenfalls möglich sein kann, ein entsprechend höheres Drehmoment auf die Innenlamellen 270 und damit durch die Kupplungsanordnung 100 zu übertragen.

Das Förderbauteil 340 ist über eine Nietverbindung 350 mit einem Dichtelement 360 und der zweiten Gehäuseschale 130 drehfest und formschlüssig verbunden. Über die Nietverbindung 350 und gegebenenfalls das Dichtelement 360 wird so eine Drehbewegung des Antriebsbauteils 150, also des Gehäuses 110, auf das Förderbauteil 340 und damit auf die Förderflächen 330 übertragen. Durch den Eingriff der Innenlamellen 270 mit dem Förderbauteil 340 über die Förderflächen 330 und die Mitnehmerflächen 320 wird so das Drehmoment auf die Innenlamellen 270 übertragen.

Auch die Außenlamellen 250 weisen Abschnitte 370-1 und 370-2 auf, die über entsprechende weitere Mitnehmerflächen 380 mit einem Träger 390, der auch als Außenlamellenträger bezeichnet wird, in Eingriff stehen und im Falle eines geschaffenen Reibschlusses das von den Innenlamellen 270 auf die Außenlamellen 250 übertragene Drehmoment aufnehmen.

Der Träger 390 weist eine im Wesentlichen topfförmige Struktur mit einer zentralen Ausnehmung auf, der über eine Nietverbindung 400 mit einer ersten Nabenscheibe 410 eines zweistufigen Schwingungsdämpfers 420 gekoppelt ist. Die erste Nabenscheibe 410 ist hierbei über ein Abstands- oder Distanzstück 500 mit dem Träger 390 gekoppelt. Das Distanzstück 500 ist hierbei als Teil der Nietverbindung 400 gebildet, kann jedoch auch von dieser separat ausgeführt sein.

Der Schwingungsdämpfer 420 weist eine Mehrzahl von ersten Federelementen 430 auf, die entlang eines Umfangs der ersten Nabenscheibe 410 angeordnet und jeweils mit einem Ende mit dieser in Anlage stehen. Die ersten Federelemente 430 sind hierbei als Schraubenfedern 440 implementiert. Mit dem jeweils anderen Ende stehen die Schraubenfedern 440 bzw. die ersten Federelemente 430 mit einem ersten Abdeckblech 450 in Anlage, welches aufgrund der in Fig. 1 gezeigten Anordnung auch als rechtes Abdeckblech bezeichnet wird. Das erste Abdeckblech 450 ist hierbei über ein Abstands- bzw. Distanzstück 490 mit einem zweiten Abdeckblech 460 verbunden, welches auch als linkes Abdeckblech bezeichnet wird. Zusammen bilden diese ein nicht abgeschlossenes Gehäuse für das Dämpferelement 430. Das zweite Abdeckblech 460 führt hierbei einstückig nach radial innen.

Die Nietverbindung 400 und das Distanzstück 500, mit der der Träger 390 mit der ersten Nabenscheibe 410 des Schwingungsdämpfers 420 verbunden ist, ist hierbei durch ringsegmentförmiges Langloch 470 geführt, welches eine maximale Bewegungsamplitude der beiden Abdeckbleche 450, 460 zu der ersten Nabenscheibe 410 und damit dem Träger 390 begrenzt.

Das zweite Abdeckblech 460 erstreckt sich in radialer Richtung deutlich weiter als das erste Abdeckblech 450 in Richtung auf die Drehachse 300 zu. So ist das erste Abdeckblech 450 über eine weitere Nietverbindung 480 und das Distanzstück 490 mit dem zweiten Abdeckblech 460 mechanisch drehfest verbunden. Das Distanzstück 490 erstreckt sich hierbei durch ein ebenfalls ringsegmentförmiges Langloch 510 in einer zweiten Nabenscheibe 520. Die zweite Nabenscheibe 520 und das erste Abdeckblech 450 sind hierbei über zweite Federelemente 530 miteinander gekoppelt, die auch hier wiederum als Schraubenfedern 540 implementiert sind. Das zweite Abdeckblech 460 führt so einstückig radial innen über den zweiten Federsatz mit den zweiten Federelementen 530 hinaus.

Selbstverständlich können bei anderen Ausführungsbeispielen einer Kupplungsanordnung 100 auch andere Federelemente als erste bzw. zweite Federelemente 430, 530 zum Einsatz kommen. So können beispielsweise Tonnenfedern, aber auch auf Elastomeren basierende Federelemente verwendet werden, sofern die technischen Randbedingungen, also insbesondere die in dem Gehäuse 110 herrschenden chemischen und/oder thermischen Randbedingungen, einen entsprechenden Einsatz ermöglichen.

Die zweite Nabenscheibe 520 ist weiter über eine drehfeste Verbindung mit der unteren Nabe 200, also dem Abtriebsbauteil 190, verbunden. Auch hierbei kann beispielsweise eine Nietverbindung zum Einsatz kommen. Es kann jedoch auch eine andere, beispielsweise formschlüssige, kraftschlüssige und/oder stoffschlüssige Verbindungstechnik verwendet werden. So können beispielsweise die zweite Nabenscheibe 520 und die untere Nabe 200 miteinander verschweißt werden. Es können jedoch auch beispielsweise Steckverbindungen ergänzend oder alternativ implementiert werden. So können anstelle auch der anderen zuvor beschriebenen Nietverbindungen diese ergänzend oder alternativ als Steckverbindung oder mit Hilfe anderer Verbindungstechniken realisiert werden.

Das Drehmoment wird so von den Außenlamellen 250 über den Träger 390 und die erste Nabenscheibe 410 über die Federelemente 430 auf die Abdeckbleche 450, 460 übertragen, von wo es über die zweiten Federelemente 530 über die zweite Nabenscheibe 520, die untere Nabe 200 zu der in Fig. 1 nicht gezeigten Getriebeeingangswelle weitergeleitet wird, wenn die ersten und zweiten Reibflächen 230, 240 miteinander in Eingriff stehen.

Bei dem in Fig. 1 gezeigten Ausführungsbeispiel ist die zweite Nabenscheibe 520 gegenüber der ersten Gehäuseschale 120 mittels eines Lagers 550, genauer gesagt im vorliegenden Fall mittels eines axialen Gleitlagers, drehbar bezüglich der Drehachse 300 gelagert. An einer dem Lager 550 abgewandten Seite der zweiten Nabenscheibe 520 stützt sich diese gegen einen Abschnitt 560 der unteren Nabe 200 ab, der seinerseits über ein weiteres Lager 565 bezogen auf eine Trennwand 570 drehbar um die Drehachse 300 gelagert ist. Auch bei dem weiteren Lager 565 handelt es sich um ein axiales Gleitlager bei dem in Fig. 1 gezeigten Ausführungsbeispiel. Die Trennwand 570 ist Teil einer vorderen Nabe 580 und begrenzt zu wenigstens einer Seite einen Kolbendruckraum 590. Dieser wird entlang der axialen Richtung, also entlang der Drehrichtung 300 durch eine Kolbenfläche 600 eines Kolbens 610 begrenzt. Der Kolben 610 stellt, wie die weitere Beschreibung noch zeigen wird, ein Anpresselement 620 dar, welches ausgebildet und angeordnet ist, um auf eine Betätigung hin die ersten und zweiten Reibflächen 230, 240 miteinander in den Reibeingriff zu bringen. Bei anderen Ausführungsbeispielen kann das Anpresselement 620 ebenso ausgebildet sein, den Reibeingriff zu trennen. Wie ebenfalls die nachfolgende Beschreibung noch näher illustrieren wird, handelt es sich jedoch bei der in Fig. 1 gezeigten Kupplungsanordnung um eine Normal-Offen-Kupplung, bei der in einem drucklosen Zustand, also ohne eine Betätigung, ein Reibeingriff nicht bzw. nur im geringfügigen Maße vorliegt. Das Anpresselement 620 ist also bei dem hier gezeigten Ausführungsbeispiel ausgebildet, um auf die Betätigung hin die ersten und zweiten Reibflächen 230, 240 miteinander in den Reibeingriff zu bringen.

Der Kolbendruckraum 590 ist mit Hilfe zweier Dichtelemente 630 und 640 gegenüber dem Anpresselement 620 einerseits und der vorderen Nabe 580 andererseits abgedichtet. Um in dem Kolbendruckraum ein entsprechendes, unter Druck stehendes Medium, bei dem es sich beispielsweise um das gleiche flüssige Medium handeln kann, mit dem auch der Rest des Gehäuses 110 befüllbar ist, weist die vordere Nabe 580 eine Zulaufbohrung 650 zu dem Kolbendruckraum 590 auf, die den Kolbendruckraum 590 fluidtechnisch mit einem der zweiten Gehäuseschale 130 zugewandten Bereich der zentralen Ausnehmung verbindet, in dem auch die Getriebeeingangswelle angeordnet ist.

Um eine Bewegung des Anpresselements 620 entlang der Drehrichtung 300 zu ermöglichen, sind die beiden Dichtelemente 630, 640 jeweils in einer entsprechenden Nut in der Trennwand 570 und der vorderen Nabe 580 angeordnet und derart ausgerichtet, dass diese mit einer entsprechenden, sich entlang der Drehrichtung 300 erstreckenden Dichtfläche 660 und 670 des Anpresselements 620 in Kontakt stehen.

Das Anpresselement 620 erstreckt sich entlang der radialen Richtung, also ausgehend von der Drehachse 300 senkrecht zu dieser bis in Höhe der Innen- und Außenlamellen 270, 250. Das Anpresselement 620 weist in diesem Bereich eine erste Anpressfläche 680 auf, die den ersten und zweiten Reibflächen 230, 240, also den Außenlamellen 250 und Innenlamellen 270, zugewandt ist. Die erste Anpressfläche 680 ist bei dem in Fig. 1 gezeigten Ausführungsbeispiel durch eine Einscherung des Anpresselements 620 gebildet, durch die sich eine Nase 690 bildet, die gegenüber dem Anpresselement 620 in diesem Bereich auf die ersten und zweiten Reibflächen 230, 240 hin ausgestellt ist. Die Nase 690 ist also über ein Materialstück, aus dem das Anpresselement 620 gefertigt ist, also beispielsweise aus einem Stahl oder einem anderen metallischen Werkstoff, mit diesem verbunden und weist daher eine gegenüber dem Anpresselement 620 geringere Federkonstante auf. Die in Fig. 1 gezeigte Kupplungsanordnung 100 weist hierbei eine Mehrzahl von Nasen 690 auf, die entlang des Umfangs der Kupplungsanordnung verteilt angeordnet sind. Die Anordnung kann hierbei sowohl regelmäßig, wie auch unregelmäßig erfolgen.

Die Nase 690 steht hierbei über die erste Anpressfläche 680 mit einer Rückseite der Innenlamelle 270-2 in Kontakt. Das Anpresselement 620 ist also mit Hilfe der Nase 690 ausgebildet, um über die erste Anpressfläche 680 des Anpresselements 620 eine Anpresskraft in Richtung der ersten und zweiten Reibflächen 230, 240 zu schaffen, durch die der Reibeingriff zwischen diesen geschaffen werden kann. Aufgrund der gegenüber dem Rest des Anpresselements 620 reduzierten Federkonstante kann gegebenenfalls durch das Vorsehen der ersten Anpressfläche 680 an der Nase 690 ein sanfteres Einkuppeln ermöglicht werden.

Das Anpresselement 620 weist darüber hinaus jedoch ferner eine zweite Anpressfläche 700 auf, die nicht an der Nase 690, sondern vielmehr an einem Abschnitt 710 des Anpresselements 620 gebildet ist. Hinsichtlich seiner Federeigenschaften, also beispielsweise seiner Federkonstanten, unterscheidet sich der Abschnitt 710 deutlich weniger von den weiteren Bereichen des Anpresselements 620, als dies beispielsweise im Fall der Nase 690 der Fall ist. So ist die Federkonstante des Abschnitts 710 typischerweise deutlich größer als die der Nase 690, also beispielsweise wenigstens ein 2-Faches, wenigstens ein 5-Faches oder wenigstens ein 10-Faches.

Wird nun das Anpresselement 620 entlang der Drehachse 300 auf die ersten und zweiten Reibflächen 230, 240 zu bewegt, bewegt sich also in Fig. 1 nach links, erfolgt zunächst ein vergleichsweise sanftes Einkuppeln über die erste Anpressfläche 680 der Nasen 690. Wird das Anpresselement 620 weiter bewegt, erhöht sich die Deformation der Nasen 690 und die Anpresskraft, die über die erste Anpressfläche 680 auf die Lamellen 250, 270 und damit auf die entsprechenden Reibflächen 230, 240 ausgeübt wird, wird größer. Wird das Anpresselement 620 nun so weit bewegt, dass dieses über die zweite Anpressfläche 700 des Abschnitts 710 die Anpresskraft bewirkt, wird gegebenenfalls eine deutlich höhere, nahezu sprunghaft ansteigende Anpresskraft auf die Reibflächen 230, 240 übertragen. Abgesehen von elastischen Deformationen des Anpresselements 620 und gegebenenfalls der Reibbeläge 260 befindet sich das Anpresselement 620 nunmehr an einem Endzustand, in dem die Kupplungsanordnung 100 vollständig eingekuppelt ist. Selbstverständlich ist es auch in diesem Bereich allerdings noch möglich, durch ein entsprechendes Erhöhen einer das Anpresselement 620 in Richtung der ersten und zweiten Reibflächen 230, 240 treibenden Kraft weiter zu erhöhen, allerdings ohne dass das Anpresselement 620 sich signifikant bewegt.

Bei dem zuvor beschriebenen Übergang von der ersten Anpressfläche 680 auf die zweite Anpressfläche 700 steht zwar auch die erste Anpressfläche 680 im Allgemeinen weiterhin in Kontakt mit der Innenlamelle 270-2, überträgt jedoch im Vergleich zu der zweiten Anpressfläche 700 deutlich geringere Kräfte, die sich aus dem Verhältnis der entsprechenden Federkonstanten der Nase 690 und der des Abschnitts 710 ergeben. Das Anpresselement 620 liegt in diesem Zustand im Wesentlichen entlang seines ganzen Umfangs an der Innenlamelle 270-2 an.

Um bei einem Einkuppeln der Kupplungsanordnung 100 eine Verschiebung eines effektiven Anpresspunktes zu unterbinden, können bei der in Fig. 1 gezeigten Ausgestaltung des Anpresselements 620 Flächenmittelpunkte bzw. effektive Berührpunkte der betreffenden beiden Anpressflächen 680, 700 unter Berücksichtigung des entsprechenden Gegenbauteils, also im vorliegenden Fall unter Berücksichtigung der Innenlamelle 270-2, im Wesentlichen zusammenfallen. Darüber hinaus kann bei der in Fig. 1 gezeigten Implementierung des Anpresselements 620 eine Anpressfläche erhöht werden. Hierdurch kann es gegebenenfalls möglich sein, eine höhere Anpresskraft aufgrund der höheren Fläche zu übertragen, ohne im Wesentlichen eine Veränderung des effektiven Anpresspunktes befürchten zu müssen.

Eine Verlagerung des effektiven Anpresspunktes könnte gegebenenfalls zu einer Veränderung der an den ersten und zweiten Reibflächen 230, 240 vorherrschenden Druckverhältnisse führen, die beispielsweise durch eine Elastizität der Reibbeläge 260 aber auch der betreffenden Innen- und Außenlamellen 270, 250 sowie anderer Bauteile hervorgerufen werden können. Hierdurch kann gegebenenfalls ein Punkt an den Reibflächen 230, 240 verschoben werden, an dem eine maximale Wärme aufgrund der entstehenden Reibung bei dem Einkuppeln übertragen werden kann. So kann es unter gewissen Umständen gegebenenfalls dazu kommen, dass eine Kühlung der ersten und zweiten Reibflächen 230, 240 durch das zuvor erwähnte flüssige Medium im Inneren des Gehäuses 110 weniger effizient möglich ist. Auch kann es zu einer ungleichmäßigen Abnutzung der Reibbeläge 260 kommen. Aufgrund der axialen Beweglichkeit der Innenlamellen 270 und der Außenlamellen 250 kann es ferner unter Umständen auch zu einer leichten Verkantung der Lamellen 250, 270 im Bereich ihrer jeweiligen Verzahnungen bzw. Eingriffe mit dem Förderbauteil 340 und dem Träger 390 kommen, wodurch der entsprechende Effekt gegebenenfalls weiter verstärkt werden kann.

Das Anpresselement 620 sowie die Außenlamellen 250, die Innenlamellen 270 und das Dichtelement 360 begrenzen hierbei wenigstens teilweise ein erstes Volumen 720 eines Innenvolumens der Kupplungsanordnung 100. Wie bereits zuvor im Zusammenhang mit dem Förderbauteil 340 kurz erläutert wurde, weist das Förderbauteil 340 die Mehrzahl von Förderflächen 330 auf, die nicht nur mit den Mitnehmerflächen 320 der Innenlamellen 270 in Eingriff steht, die Förderflächen 330 sind vielmehr ebenso ausgebildet, um bei einer Bewegung der Förderflächen gegenüber dem flüssigen Medium in dem Inneren des Gehäuses 110 einen Strom des flüssigen Mediums zu bewirken. Zu diesem Zweck ist das Förderbauteil 340 mit dem als Antriebsbauteil 150 dienenden Gehäuse 120 drehfest verbunden. Die Förderflächen 330 sind bei dem in Fig. 1 gezeigten Ausführungsbeispiel nicht zuletzt in dem ersten Volumen 720 angeordnet, sodass bei einer Bewegung der Förderflächen 330 zu dem flüssigen Medium das in diesem ersten Volumen 720 befindliche flüssige Medium gefördert wird.

Um eine möglichst effiziente Förderung des flüssigen Mediums zu ermöglichen, kann es in diesem Zusammenhang ratsam sein, dass die Innenlamellen 270 derart über die Mitnehmerflächen 320 mit den Förderflächen 330 des Förderbauteils 340 in Eingriff stehen zu lassen, dass eine Berührfläche zwischen den betreffenden Mitnehmerflächen 320 und der Förderfläche 330 höchstens 50 % einer Fläche der Förderfläche ist. Sofern eine ausreichende Stabilität und Kraftübertragung bzw. Drehmomentübertragung über die Förderflächen 330 auf die Mitnehmerflächen 320 der Innenlamellen 270 gewährleistet ist, kann eine weitere Reduzierung gegenüber dem vorgenannten Verhältnis gegebenenfalls zu einer Verbesserung der Strömung führen. So kann es bei anderen Kupplungsanordnungen 100 beispielsweise ratsam sein, das vorgenannte Verhältnis auf höchstens 30 %, höchstens 25 %, höchstens 20 %, höchstens 15 % oder höchstens 10 % zu beschränken. Eine untere Grenze für dieses Verhältnis ist in der Doppelfunktion aus Förderfläche einerseits und Eingriffsfläche andererseits zu suchen.

Die Förderflächen 330, wie sie in Fig. 1 gezeigt sind, sind hierbei zusammenhängend und eben. Sie sind entlang der Umfangs- oder Tangentialrichtung, also im Wesentlichen senkrecht zu der Drehachse 300 und von dieser wegweisenden radialen Richtung ausgerichtet. Im Hinblick auf die drehmomentübertragenden Eigenschaften der Förderflächen 330 kann diese Ausgestaltung vorteilhaft sein, da hierdurch axiale Kräfte entlang der Drehachse 300 über die Mitnehmerflächen 320 auf die Innenlamellen 270 reduziert, wenn nicht sogar vermieden werden können. Aber auch im Hinblick auf die Bewirkung des Stroms des fluiden Mediums, also beispielsweise eines Öls, kann diese Ausgestaltung der Förderflächen 330 von Vorteil sein. So kann hierdurch gegebenenfalls ein im Wesentlichen radial nach außen gerichteter Strom des flüssigen Mediums auf die ersten und zweiten Reibflächen 230, 240 hin bewirkt werden.

Die betreffenden Lamellen 270, 250 bzw. ihre gegebenenfalls implementierten Reibbeläge 260 können derart ausgebildet sein, dass diese von dem Strom des flüssigen Mediums durchströmbar sind. Zu diesem Zweck können die entsprechenden Lamellen 250, 270 bzw. die mit diesen verbundenen Komponenten Kanäle oder Fluidkanäle aufweisen, die einen Durchtritt des flüssigen Mediums entlang der radialen Richtung ermöglichen. Diese können beispielsweise in geraden Linien, jedoch auch in gebogenen Linien ausgeführt sein und im Bereich der Reibflächen 230, 240 verlaufen. Hierdurch kann eine gerade im Bereich der Reibflächen 230, 240 frei werdende Reibungsenergie bzw. Wärme räumlich nah an das flüssige Medium abgegeben und aufgrund des herrschenden Stroms abtransportiert werden.

Die Förderfläche 330 weist in der in Fig. 1 gezeigten Querschnittsebene eine Querschnittsfläche auf, die ihrerseits einen nicht unerheblichen Anteil an einer Querschnittsfläche des zweiten Volumens 720 in der betreffenden Querschnittsebene umfasst. Um eine möglichst hohe, den Umständen jedoch entsprechende Förderwirkung des Förderbauteils 340 zu ermöglichen, kann es ratsam sein, bei einer Kupplungsanordnung 100 die Querschnittsfläche des ersten Volumens 720 im Vergleich zu der Querschnittsfläche der Förderfläche 330 derart zu wählen, dass diese höchstens ein 20-Faches, höchstens ein 15-Faches, höchstens ein 10-Faches oder höchstens ein 7,5-Faches der Querschnittsfläche der Förderfläche 330 entspricht. Es kann sogar möglich sein, bei einer Kupplungsanordnung noch geringere Faktoren zu verwenden. So kann es durchaus möglich sein, auch höchstens ein 5-Faches, höchstens ein 3-Faches oder höchstens ein 2-Faches der Förderfläche 330 als Querschnittsfläche des ersten Volumens 720 vorzusehen. Selbstverständlich können bei anderen Ausführungsbeispielen jedoch auch größere Vielfache als die oben genannten auftreten.

Um einen entsprechenden Zufluss des flüssigen Mediums zu der Förderfläche 330 zu ermöglichen, weist das Anpresselement 620 in radialer Richtung auf Höhe der Förderflächen 330 oder näher zu der Drehachse 300 hin eine in Fig. 1 nicht gezeigte Durchlassöffnung auf, die auch als Öffnungsbohrung oder Durchtrittsöffnung bezeichnet wird. Die Durchtrittsöffnung ist hierbei radial außerhalb des Dichtelements 360 angeordnet, mündet also in das erste Volumen 720 ein. Hierdurch kann flüssiges Medium durch die in Fig. 1 nicht gezeigte Durchtrittsöffnung in das erste Volumen 720 eintreten, wo dieses durch die sich relativ zu dem flüssigen Medium gegebenenfalls drehenden Förderflächen 330 radial nach außen durch die Reibflächen 230, 240 transportiert wird. Dort tritt der Strom des flüssigen Mediums in ein Teilvolumen 730 des Gehäuses 110 ein, in dem auch der Schwingungsdämpfer 420 angeordnet ist. In dem Teilvolumen 730 kann dann die an das flüssige Medium abgegebene Wärme an andere Bauteile, beispielsweise das Gehäuse 110, abgegeben werden. Ein Teil des flüssigen Mediums kann dann durch die in Fig. 1 nicht gezeigte Durchlassöffnung wieder in das erste Volumen 720 eintreten, während ein weiterer Teil des flüssigen Mediums das Teilvolumen 730 durch das Lager 550 verlassen kann. Die Trennwand 570 trennt hierbei das Teilvolumen 730 von dem Kolbendruckraum 590.

Die Förderwirkung des Förderbauteils 340 basiert also nicht zuletzt darauf, dass bei einem Drehzahlunterschied zwischen dem Förderbauteil 340 und dem flüssigen Medium diesem ein Strom aufgezwungen wird. Das Förderbauteil kann sich so über die beschriebenen drehfesten Verbindungen eine Relativbewegung zwischen dem Antriebsbauteil 150 und dem Abtriebsbauteil 190 zunutze machen. Eine solche Relativbewegung liegt insbesondere im Bereich des Schlupfs vor, wenn also die ersten und zweiten Reibflächen 230, 240 miteinander in Kontakt stehen, jedoch unterschiedliche Drehgeschwindigkeiten aufweisen. Gerade in dieser Situation wird eine nicht unerhebliche Wärmemenge im Bereich der Reibflächen 230, 240 erzeugt, die über das flüssige Medium abtransportiert werden sollte. Liegt ein Drehzahlausgleich schließlich vor, ist also die Kupplungsanordnung 100 eingekuppelt, wird im Wesentlichen keine neue Wärme erzeugt, sodass auch ein Nachlassen der Förderwirkung aufgrund ähnlicher Geschwindigkeiten des Förderbauteils 340 einerseits und des flüssigen Mediums andererseits unproblematisch ist, wenn sich diese im Wesentlichen mit dem Gehäuse 110 mit dreht.

Das Dichtelement 360 trennt ein zweites Volumen 740 von dem ersten Volumen 720 ab. Das zweite Volumen 740 wird hierbei ferner durch einen Oberflächenabschnitt 750 der Innenfläche 220 der zweiten Gehäuseschale 130 und einer Kolbenrückseite 760 wenigstens teilweise begrenzt, wobei die Kolbenrückseite 760 an einer der Kolbenfläche 600 abgewandten Seite des Anpresselements 620 liegt.

Kommt es aufgrund einer Relativbewegung des Förderbauteils 340 mit seinen Förderflächen 330 zu dem flüssigen Medium zu einer Pumpwirkung, sinkt aufgrund hydrodynamischer Effekte ein (statischer) Druck in dem ersten Volumen 720. Dadurch, dass das Dichtelement 360 jedoch das erste Volumen 720 von dem zweiten Volumen 740 trennt, kann so in dem zweiten Volumen 740 unabhängig von einer gegebenenfalls eintretenden Förderwirkung des Förderbauteils 340 der dort herrschende Druck im Wesentlichen konstant gehalten werden, zumindest jedoch ein gegebenenfalls aufgrund anderer Effekte auftretenden Druckabfall begrenzt werden. Hierdurch wird auch bei einer Relativbewegung bzw. Pumpwirkung durch das Förderbauteil 340 eine Kraft, die auf die Kolbenrückseite 760 einwirkt, im Wesentlichen nicht durch die Förderwirkung und damit durch die Bewegung des Förderbauteils 340 beeinflusst.

Anders ausgedrückt kann durch den Einsatz des Dichtelements 360 ein in dem zweiten Volumen 740 herrschender Druck konstanter gehalten werden, sodass bei einer Ansteuerung des Anpresselements 620 durch Einleiten oder Abziehen eines Flüssigkeitsvolumens in den oder aus dem Kolbendruckraum 590 auftretende Druckänderungen in dem zweiten Volumen und damit Kraftänderungen auf die Kolbenrückseite 760 im Wesentlichen unterbunden, zumindest jedoch reduziert werden können. Dadurch, dass die entsprechende Kraft auf die Kolbenrückseite 760 konstanter gehalten wird, kann ein Einkuppelverhalten, ein Auskuppelverhalten oder eine Definition eines bestimmten Schlupfverhältnisses an den Reibflächen 230, 240 durch Ansteuern des Anpresselements 620 gegebenenfalls verbessert werden. Es kann also gegebenenfalls möglich sein, eine Kontrollierbarkeit bzw. Steuerbarkeit der Kupplungsanordnung 100 gemäß einem Ausführungsbeispiel durch den Einsatz des entsprechenden Dichtelements 360 zu verbessern.

Je nach konkreter Ausgestaltung des Dichtelements 360 kann es möglich sein, das zweite Volumen 740 kleiner oder auch größer auszugestalten, indem eine radiale Position des Dichtelements 360 verändert wird. Hierbei kann jedoch weniger die tatsächliche Größe des ersten Volumens 720 im Vordergrund stehen, als vielmehr eine Lage und/oder eine Größe eines Flächenabschnitts des Anpresselements 620, der das zweite Volumen 740 wenigstens teilweise begrenzt. So treten bei einer Drehung der Kupplungsanordnung 100 Zentrifugalkräfte auf das in dem zweiten Volumen 740 und dem Kolbendruckraum 590 befindliche flüssige Medium auf. Diese führen zu einer Ausbildung eines Drucks, der von beiden Seiten her auf das Anpresselement 620 einwirkt und Kräfte bewirkt, die einander entgegengerichtet sind. Die radiale Position des Dichtungselements 360 bzw. seines Übergangsbereichs 790 hat daher darauf einen Einfluss, ob es aufgrund der Fliehkraftwirkung zu einer zusätzlichen effektiven Kraft auf das Anpresselement 620 durch die Druckveränderungen kommt, wie groß diese ist und in welche Richtung sie wirkt.

Wird beispielsweise der Übergangsbereich 790 des Dichtelements 360 näher auf die Drehachse 300 hin versetzt, sodass eine Erstreckung des Flächenabschnitts des Anpresselements 620 entlang der radialen Richtung verkleinert wird und das zweite Volumen 740 kleiner wird, werden auch die von Seiten des zweiten Volumens 740 auf das Anpresselement 620 einwirkenden Kräfte kleiner. Ein im Kolbendruckraum 590 aufgrund der Zentrifugalkraft wirkender Druck führt so zu einer gegenüber der unveränderten Position des Dichtelements 360 größeren effektiven Kraft auf das Anpresselement 620. Die auftretenden Zentrifugalkräfte im Kolbendruckraum 590 werden daher unterkompensiert.

Entsprechend kann durch eine Variation des Ortes, an dem der Übergangsabschnitt 790 angeordnet ist, jedoch auch eine Überkompensation oder eine im Wesentlichen vollständige Kompensation des wirkenden Fliehkraftdrucks auf das Anpresselement 620 ermöglicht werden. Hierbei kann es gegebenenfalls ratsam sein, den unter den betreffenden Umständen aufgrund der Zentrifugalkräfte in dem zweiten Volumen 740 auftretenden Druck derart zu bemessen, dass dieser weder zu groß, noch zu klein ist, um eine Einrück- oder Ausrückbewegung des Anpresselements 620 zu hemmen oder gar zu verhindern.

Wie bereits zuvor erwähnt wurde, ist das Dichtelement 360 ferner ausgebildet, um nicht nur das erste Volumen 720 von dem zweiten Volumen 740 fluidtechnisch zu trennen, es ist ferner ausgebildet, um auf das Anpresselement 620 oder ein anderes Bauteil mit einem wenigstens teilweise scheibenförmigen Abschnitt eine solche Kraft auszuüben, dass das Anpresselement 620 in seine Ausgangsposition zurückkehrt, wenn dieses nicht betätigt wird. Anders ausgedrückt ist das Dichtelement 360 hier derart ausgebildet, dass dieses auf das Anpresselement 620 eine solche Kraft ausübt, dass dieser in die in Fig. 1 gezeigte Ausgangsposition gebracht wird, in der gerade der Reibeingriff zwischen den ersten und zweiten Reibflächen 230, 240 gelöst, zumindest jedoch so weit geschwächt ist, dass kein nennenswertes Drehmoment über die Kupplungsanordnung 100 übertragen wird. Die Betätigung des Anpresselements 620 erfolgt hierbei durch Einleiten eines entsprechenden Fluidvolumens durch die Zulaufbohrung 650 zu dem Kolbendruckraum 590.

Um diese Doppelfunktionalität des Dichtelements 360 zu ermöglichen, weist das Dichtelement 360 eine erste Dichtfläche 770 und eine zweite Dichtfläche 780 auf, die durch einen Übergangsabschnitt 790 miteinander verbunden sind. Die erste Dichtfläche 770 und die zweite Dichtfläche 780 sind hierbei beide im Wesentlichen senkrecht zu der Drehachse 300 ausgerichtet und entlang dieser beabstandet. Die beiden Dichtflächen 770, 780 sind hierbei auch entlang der radialen Richtung, also senkrecht zu der Drehachse 300 voneinander beabstandet, wobei bei dem in Fig. 1 gezeigten Dichtelement 360 die zweite Dichtfläche 780 radial innen liegend zu der ersten Dichtfläche 770 angeordnet ist. Hierdurch weist der Übergangsabschnitt 790 eine Kegelmanteloberflächenform auf. Selbstverständlich können bei anderen Ausführungsbeispielen die beiden Dichtflächen 770, 780 entlang der radialen Richtung auch vertauscht angeordnet sein.

Die beiden Dichtflächen 770, 780 liegen hierbei auf entsprechenden Ebenen bzw. ringförmigen Abschnitten des Gehäuses 110 bzw. der zweiten Gehäuseschale 130 und dem Anpresselement 620 an. Diese können je nach konkreter Ausgestaltung gegebenenfalls oberflächenbehandelt, also beispielsweise abgedreht, sein, um entsprechende Gegendichtflächen zu bilden.

Kommt es nun aufgrund einer Bewegung des Anpresselements 620 zu einer Deformation des Dichtelements 360, wird nicht zuletzt der Übergangsabschnitt 790 deformiert, wobei aufgrund der flächigen Ausgestaltung der beiden Dichtflächen 770, 780 auch im Falle einer Deformation derselben oder einer Änderung ihrer geometrischen Ausrichtung zu dem Anpresselement 620 und der zweiten Gehäuseschale 130 tendenziell zunächst eine flächenförmige Auflage vorherrscht. Je nach Grad der Verformung des Dichtelements 620 kann es jedoch auch zu einem Abheben oder Abrollen wenigstens eines Teils einer der beiden Dichtflächen 770, 780 kommen. Es kann in einem solchen Fall zumindest abschnittsweise, gegebenenfalls jedoch auch vollständig dazu kommen, dass die betreffenden Dichtflächen 770, 780 das entsprechende Bauteil, also das Anpresselement 620 bzw. die zweite Gehäuseschale, nur linienförmig berühren. Es liegt jedoch typischerweise stets wenigstens ein linienförmiger Berührbereich vor. Hierdurch kann auch im Falle einer Bewegung des Anpresselements 620 eine Dichtwirkung des Dichtelements 360 wenigstens teilweise aufrechterhalten werden. Zur besseren Fixierung des Dichtelements 360 an der zweiten Gehäuseschale 130 weist dieses darüber hinaus an einer dem Übergangsabschnitt 790 abgewandten Seite einen Abschnitt auf, der einer Form der zweiten Gehäuseschale 130 angepasst ist, um so in radialer Richtung und in axialer Richtung, also entlang der Drehachse 300, wenigstens teilweise eine formschlüssige Verbindung zu bilden. Diese formschlüssige Verbindung kann gegebenenfalls auch nur als Montagehilfe bzw. Zentrierhilfe für das Dichtelement 360 ausgelegt sein. Ergänzend oder alternativ kann der Abschnitt, der auch als Kragen oder Rand bezeichnet wird, auch zur mechanischen Stabilisierung des Dichtelements 360 vorgesehen werden. So kann durch diesen gegebenenfalls eine Verformung des Dichtelements 360 in Umfangsrichtung bei einem Verfahren des Anpresselements 620 entlang der Drehachse 300 gegebenenfalls reduziert oder vollständig unterbunden werden. So können beispielsweise Wellenbildungen entlang der Umfangsrichtung bei entsprechenden Belastungen auftreten. Auch kann gegebenenfalls die zuvor beschriebene Anpassung der Formen des Dichtelements 360 und der zweiten Gehäuseschale 130 entfallen.

Das Dichtelement 360 dient somit bei dem in Fig. 1 gezeigten Ausführungsbeispiel einer Kupplungsanordnung 100 nicht nur zur fluidtechnischen Trennung des ersten und des zweiten Volumens 720, 740, sondern erfüllt die zusätzliche Funktion der Rückführung des Anpresselements 620 in eine Ausgangslage vor einer Betätigung desselben, sodass es sich bei der Kupplungsanordnung 100 gerade um eine Normal-Offen-Kupplungsanordnung handelt. Gegebenenfalls kann das Dichtelement 620 auch durch ein weiteres entsprechendes Federelement, beispielsweise in Form einer ergänzenden Teller-, Membran-, Blatt- oder Spiralfeder unterstützt werden.

Bei anderen Ausführungsbeispielen kann das Dichtelement 360 selbstverständlich auch eine derartige Kraft auf das Anpresselement 620 oder ein anderes Bauteil ausüben, sodass die Kupplungsanordnung 100 eine Normal-Geschlossen-Kupplungsanordnung darstellt, bei der ohne eine Betätigung ein Reibeingriff zwischen den ersten und zweiten Reibflächen 230, 240 besteht. Anders ausgedrückt kann das Dichtelement 360, das auch als Dichtblech bezeichnet wird, nicht nur wie in Fig. 1 gezeigt auf Druck vorgespannt, sondern auch auf Zug vorgespannt sein. Hierdurch kann beispielsweise eine Normal-Geschlossen-Kupplungsanordnung realisiert werden.

Bei der in Fig. 1 gezeigten Kupplungsanordnung 100 handelt es sich um einen Drei-Leitungs-Typ, bei dem die Zulaufbohrung 650 eine der drei Leitungen bzw. Kanäle darstellt, mit deren Hilfe der Kolbendruckraum 590 mit dem flüssigen Medium, gegebenenfalls auch mit einem anderen flüssigen Medium, beschickt werden kann. Um eine Bewegung des Anpresselements 620 zu ermöglichen, ist das zweite Volumen 740 über einen in Fig. 1 gestrichelt eingezeichneten Zuleitungskanal 800, der in eine Zuführung 810 zu dem zweiten Volumen 740 führt, fluidtechnisch verbunden. Der Zuleitungskanal 800 mündet hierbei in einen Zuflussbereich 820, der entlang der in Fig. 1 nicht gezeigten Getriebeeingangswelle geführt ist. Der Zuleitungskanal 800 und die Zuführung 810 ermöglichen so einen Zu- und Abfluss des flüssigen Mediums im Falle eines Bewegens des Anpresselements 620. Sie dienen somit dem Ausgleich des entsprechenden Volumens.

Der Zuflussbereich 820 ist hierbei über einige in der Innenverzahnung 210 bzw. der entsprechenden Außenverzahnung der Getriebeeingangswelle fehlender Zähne mit einem Zufluss für das flüssige Medium, also für das Öl bzw. Getriebeöl, verbunden. Häufig werden im Bereich der Innenverzahnung 210 und der korrespondierenden Außenverzahnung der in Fig. 1 nicht gezeigten Getriebeeingangswelle ein Zahn oder zwei oder mehr benachbarte Zähne an mehreren Stellen entlang des Umfangs der entsprechenden Verzahnungen eingespart, sodass Öldurchtrittsleitungen an diesen Stellen gebildet werden, die den Zuflussbereich mit dem Getriebe fluidtechnisch koppeln. Genauer gesagt fehlen bei dem in Fig. 1 gezeigten Ausführungsbeispiel an drei Stellen jeweils zwei benachbarte Zähne in den betreffenden Verzahnungen, um die Öldurchtrittsleitungen zu bilden.

Über den Zuflussbereich 820 wird nicht nur das zweite Volumen 740 mit dem flüssigen Medium versorgt, auch das Teilvolumen 730 ist über den Zuflussbereich 820 und in dem Lager 565 integrierten Ölführungsleitungen fluidtechnisch verbunden. Anders ausgedrückt führt der Ölzulauf durch die Innenverzahnung 210 und die entsprechende Außenverzahnung der Getriebeeingangswelle, den Zuflussbereich 820 und die Ölführungskanäle des Lagers 565. Die Zulaufbohrung 650 zu dem Kolbendruckraum 590 ist hierbei von dem Zuflussbereich 820 durch eine in Fig. 1 ebenfalls nicht gezeigte Dichtung getrennt. Der Zuflussbereich 820 stellt so die zweite Leitung dar.

Das flüssige Medium kann das Teilvolumen 730 über entsprechende Ölführungen bzw. Ölführungskanäle in dem Lager 550 und einem Abflussbereich 830 verlassen. Der Abflussbereich 830 ist hierbei zwischen der unteren Nabe 200 und einer Pumpennabe 840 gebildet und weist einen im Wesentlichen ringförmigen Querschnitt auf. Die Pumpennabe 840 ist hierbei gegenüber der unteren Nabe 200 mit Hilfe eines Dichtelements 850 abgedichtet. Das in dem Abflussbereich 830 eingetretene flüssige Medium kann dann über eine Öffnung 860, die auch als Ölablauf bezeichnet wird, abgezogen werden. Bei der in Fig. 1 gezeigten Kupplungsanordnung 100 ist die Öffnung 860 hierbei mit dem Sumpf des Getriebes oder aber auch einem anderen Behälter für das Öl bzw. das flüssige Medium verbunden. Die Öffnung 860 stellt somit zusammen mit dem Abflussbereich 830 die dritte Leitung dar.

Das Fördervolumen, welches durch das Förderbauteil 340 mit seinen Förderflächen 330 im Inneren des Gehäuses 110 umwälzbar ist, übersteigt in vielen Fällen ein Volumen, welches dem Gehäuse 110 über den Zuflussbereich 820 und den Abflussbereich 830 zugeführt bzw. über diesen abgeführt wird, um ein Vielfaches. So wird mit Hilfe der Förderflächen 330 des Förderbauteils 340, aber auch durch andere, eine Förderung des flüssigen Mediums unterstützende Strukturen im Inneren des Gehäuses 110 häufig ein Volumenstrom erzeugt. Dieser kann wenigstens ein 5-Faches, wenigstens ein 10-Faches, wenigstens ein 15-Faches oder wenigstens ein 20-Faches des durch den Zuflussbereich 820 der Kupplungsanordnung 100 zur Verfügung gestellten Volumens des flüssigen Mediums betragen, jedoch auch kleiner als die vorgenannten Werte sein. Die hierbei angegebenen Verhältnisse beziehen sich auf eine maximale Fördermenge durch das Förderbauteil 340. Die Förderflächen 330, die gerade eine Zwangsströmung in dem jeweiligen, mit Fluid befüllten und um die Drehachse rotierenden Gehäuse 110 erzeugen, nutzen gerade den Effekt unterschiedlicher Drehzahlen an der Antriebs- und Abtriebsseite der Kupplungsanordnung 100 aus, also die unterschiedlichen Drehzahlen an dem Antriebsbauteil 150 und dem Abtriebsbauteil 190. Die Förderflächen 330 wirken bezüglich der Umwälzung des flüssigen Mediums wie ein Pumpenrad bzw. wie ein Turbinenrad bei einer Hydrokupplung oder einem hydrodynamischen Drehmomentwandler.

Die Pumpennabe 840 ist mit der ersten Gehäuseschale 120 des Gehäuses 110 über eine Verschweißung 870 verbunden. Auch die zweite Gehäuseschale 130 ist mit der vorderen Nabe 580 über eine Verschweißung 880 verbunden, sodass sich im Zusammenhang mit der Schweißverbindung 140, die beispielsweise als Schweißnaht ausgeführt sein kann und die beiden Gehäuseschalen 120, 130 miteinander verbindet, ein abgeschlossenes Volumen mit dem Teilvolumen 730 sowie dem ersten und dem zweiten Volumen 720, 740 bildet.

Die entsprechenden Verschweißungen 870, 880 und 140 können hierbei sowohl als Schweißnähte wie auch als Schweißpunkte ausgeführt werden. Selbstverständlich können diese Verbindungstechniken auch gegebenenfalls durch andere, den Einsatzbedingungen angepasste und angemessene Verbindungstechniken ausgetauscht werden.

Fig. 1 zeigt darüber hinaus ein Wuchtgewicht 890, das im vorliegenden Fall mit der ersten Gehäuseschale 120 verschweißt ist. Dieses dient dem Ausgleich von Konstruktions-, Montage- oder anders bedingten Unwuchten und kann so entsprechende Unwuchten im Antriebsstrang des Fahrzeugs reduzieren. Die Position des Wuchtgewichts, wie es in Fig. 1 gezeigt ist, kann jedoch bei anderen Ausführungsbeispielen variieren.

Zwischen der Zuführung 810, die als Teil der vorderen Nabe 580 gebildet ist, und dem Gehäuse 110, genauer gesagt der zweiten Gehäuseschale 130, ist ferner eine Distanzscheibe 900 eingesetzt. Diese dient, wie im Nachfolgenden kurz erläutert wird, zur Einstellung eines Spiels zwischen den Lamellen, also der Einstellung des Spiels zwischen den ersten und zweiten Reibflächen 230, 240. So bestimmt das Spiel zwischen den Reibflächen 230, 240 einerseits die Fähigkeit der Kupplungsanordnung 100 den Momentenfluss zu unterbrechen sowie ein Ansprechverhalten beim Ein- oder Auskuppeln der Kupplungsanordnung 100.

Während im Interesse einer zuverlässigen Trennung der Reibflächen 230, 240 und damit im Interesse einer zuverlässigen Trennung des Drehmomentflusses tendenziell größerer Spiele S angezeigt sind, müssen diese jedoch von dem Anpresselement 620 im Falle des Einkuppelns bzw. des Auskuppelns überbrückt werden. Hierdurch kann es gerade bei einem kontrollierten Einrücken der Kupplungsanordnung 100 zu einem verzögerten Aufbau des Reibschlusses kommen, da zuvor das Spiel von dem Anpresselement 620 überbrückt werden muss. Eine Einstellung des Spiels der Lamellen kann daher gegebenenfalls ein Verhältnis zwischen einem Ansprechverhalten der Kupplung einerseits und einem Verschleiß der ersten und zweiten Reibflächen 230, 240 bzw. einer Trennfähigkeit der Kupplungsanordnung 100 verbessern.

Zu diesem Zweck weist die Kupplungsanordnung 100 gemäß einem Ausführungsbeispiel die zuvor beschriebene Distanzscheibe 900 auf. Die Distanzscheibe 900 kann hierbei - innerhalb entsprechender akzeptabler Toleranzbereiche - den jeweiligen Bauteildimensionen der Innenlamellen 270, der Außenlamellen 250, der Reibbeläge 260 und der weiteren gegebenenfalls vorhandenen Bauteile angepasst werden, die einen Einfluss auf das Lamellenspiel S haben. Hierbei kann das Lamellenspiel sowohl auf Basis zuvor vermessener Bauteildimensionen, als auch im Rahmen einer (Teil-) Montage der Kupplungsanordnung 100 und einer entsprechenden Bestimmung oder Messung des Lamellenspiels entlang der Drehachse 300 erfolgen.

Ist das Lamellenspiel S auf eine der beschriebenen Arten und Weisen bestimmt, kann dann eine entsprechende Distanzscheibe 900 beispielsweise aus einem Satz vorgefertigter Distanzscheiben eingesetzt werden. Diese kann selbstverständlich auch individuell eingeschliffen werden. Nach dem Einsetzen der entsprechenden Distanzscheibe 900 kann dann das Gehäuse 110 der Kupplungsanordnung 100 nach Fertigstellung der Montage beispielsweise mit den in Fig. 1 gezeigten Verschweißungen 870, 880, 140 verschlossen werden.

Die Distanzscheibe 900 kann darüber hinaus auch als zwei- oder mehrteilige Lösung implementiert werden. Bei der zwei- oder mehrteiligen Lösung der Distanzscheibe kann diese ein erstes Distanzscheibenbauteil und ein zweites Distanzscheibenbauteil umfassen, welche entlang ihres Umfangs wenigstens abschnittsweise ein keilförmiges Profil aufweisen. Hierdurch kann durch ein Verdrehen der beiden Distanzscheibenbauteile zueinander eine Dicke der Distanzscheibe entlang der Drehachse 300, also entlang der axialen Richtung durch ein Verdrehen der beiden Teile zueinander verändert werden.

Durch das Einsetzen einer solchen zwei- oder mehrteiligen Distanzscheibe, also einer Distanzscheibe 900 mit einer Mehrzahl von Distanzscheibenbauteilen kann so durch ein Verdrehen der zweiten Gehäuseschale 130 gegenüber der vorderen Nabe 580 im Falle der Einbauposition der Distanzscheibe 900, wie sie in Fig. 1 gezeigt ist, das Lamellenspiel S zwischen den Reibflächen 230, 240 eingestellt werden.

Der zweite Gehäusedeckel 130 weist bei dem in Fig. 1 gezeigten Ausführungsbeispiel einer Kupplungsanordnung 100 einen ebenen Abschnitt 910 an einer Außenfläche des Gehäuses 110 auf, an die die Anschweißschraube zur Befestigung der Kupplungsanordnung 100 bzw. zur Befestigung des Gehäuses 110 an einer Flexplatte eines Motors oder eines anderen Antriebsaggregats befestigt ist. Die Anschweißschraube 160 ist zu diesem Zweck über eine Verschweißung 920 mit dem ebenen Abschnitt 910 des Gehäuses 110 verbunden. Das Gehäuse 110 bzw. die zweite Gehäuseschale 130 weist jedoch an der dem Innenvolumen zugewandten Innenfläche 220 in diesem Bereich eine Ausnehmung 930 auf, sodass die zweite Gehäuseschale 130 in diesem Bereich eine geringere Materialstärke als in anderen Bereichen aufweist. Hierdurch ist es möglich, den Träger 390 für die Außenlamellen 250 derart zu gestalten, dass dieser bis in die Ausnehmung 930 hineinragt. Dies ermöglicht es, auch die Außenlamelle 250-1 als ebene Scheibe auszuführen, ohne eine Berührung des Abschnitts 370-1 oder der weiteren Mitnehmerfläche 380-1 auch unter schwierigen Betriebsbedingungen mit dem Gehäuse 110 befürchten zu müssen. Hierdurch kann eine zu der Außenlamelle 250-2 identische Außenlamelle 250-1 eingesetzt werden, ohne dass besondere Vorkehrungen im Bereich des Abschnitts 370 oder anderer gestalterischer Merkmale derselben berücksichtigt werden müssen.

Eine solche Ausnehmung 930, die einem ebenen Abschnitt 910 an dem Gehäuse 110 gegenüberliegt, kann beispielsweise durch das Schaffen eines so genannten S-Schlags im Bereich der zweiten Gehäuseschale 130 erfolgen. Der S-Schlag kann hierbei entlang des ganzen Umfangs vorgesehen werden, wohingegen die ebenen Abschnitte 910 sich entlang der Umfangsrichtung auf enge Raumbereiche beschränken können, in denen eine Verbindung mit der Anschweißschraube 160 erfolgen soll. Ist der S-Schlag in die zweite Gehäuseschale 130 eingebracht worden, kann dann durch ein Eindrücken derselben im Bereich der zu erzeugenden ebenen Abschnitte 910 dieser bereitgestellt werden. Das hierbei in das Innere des Gehäuses 110 eindringende Material, also das der Innenfläche 220 der zweiten Gehäuseschale 130 eindringende Material kann dann beispielsweise durch ein Abdrehen oder ein anderes spanendes Verfahren entfernt werden, um die Ausnehmung 930 zu schaffen.

Die im Zusammenhang mit Fig. 1 beschriebene Maßnahme der Schaffung des ebenen Abschnitts 910 zur Aufnahme der Anschweißschraube 160 oder eines anderen Zapfens zur Befestigung der Kupplungsanordnung an einem Antriebsaggregat oder einer anderen Einheit kann beispielsweise bei einer Kupplungsanordnung 100 sinnvoll oder notwendig sein, bei der eine besondere Lage des Antriebsstrangs bzw. seiner Komponenten notwendig ist. So handelt es sich bei der in Fig. 1 gezeigten Kupplungsanordnung 100 beispielsweise um eine solche, die für einen Quereinbau, also für eine Montage quer zur Fahrzeuglängsachse bestimmt ist. Ausführungsbeispiele einer solchen Kupplungsanordnung sind jedoch bei Weitem nicht auf solche Kupplungsanordnungen beschränkt. Sie können vielmehr auch für längs eingebaute Motoren und Getriebeeinheiten herangezogen werden.

Lediglich der Vollständigkeit halber soll an dieser Stelle noch erwähnt werden, dass das Anpresselement 620 nicht über eine formschlüssige Verbindung mit dem Gehäuse 110 gekoppelt ist. Werden also die durch die Nase 690 und andere Komponenten hervorgerufene kraftschlüssige Verbindung bzw. reibschlüssige Verbindung überwunden, ist das Anpresselement 620 gegenüber dem Gehäuse 110 "frei" drehbar. Eine solche Situation kann beispielsweise bei einem abrupten Drehzahlwechsel ohne ein erneutes Einkuppeln der Kupplungsanordnung 100 erfolgen. Beispiele hierfür stellen ein Abbremsen des Fahrzeugs ausgehend von einer hohen Motordrehzahl zum Stillstand (Stillstand des Abtriebsbauteils 190) dar, um nur ein Beispiel zu nennen. Die freie Drehbarkeit des Anpresselements 620 kann in einer solchen Situation gegebenenfalls zu einer Geräuschentwicklung aus dem Bereich der Kupplungsanordnung 100 führen, was beispielsweise vom Fahrer als störend empfunden werden kann.

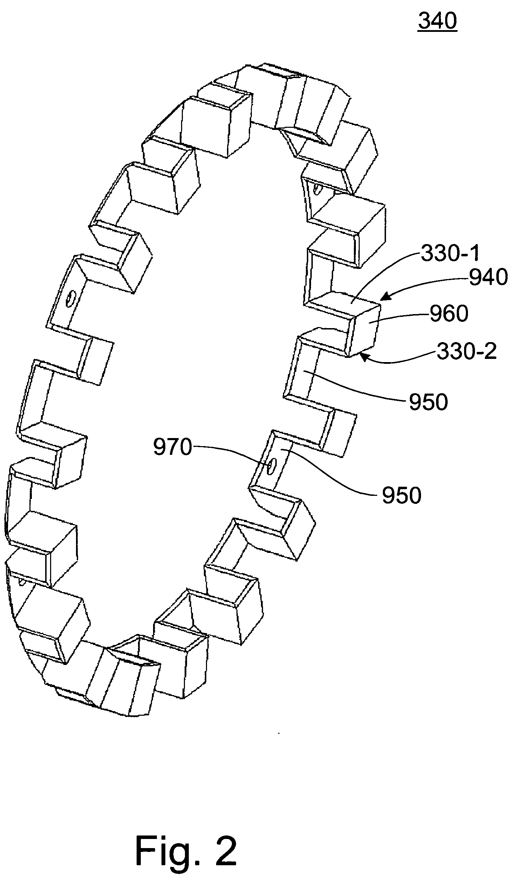

Fig. 2 zeigt eine dreidimensionale Darstellung des Förderbauteils 340, wie es im Rahmen der Kupplungsanordnung 100 in Fig. 1 zum Einsatz kommt. Das Förderbauteil 340, das auch als Lamellenmitnahme bezeichnet wird, ist hierbei im Wesentlichen als vollständiger Ring ausgeführt, also ringförmig ausgebildet. Das Förderbauteil 340 weist hierbei eine Mehrzahl von regelmäßig entlang des Umfangs des Förderbauteils 340 angeordnete Zähne 940 auf, die sich über ringsegmentförmige Abschnitte 950 des Förderbauteils 340 erheben. Die Zähne 940 sind hierbei regelmäßig äquidistant angeordnet.

Jeder der Zähne, von denen in Fig. 2 lediglich einer mit einem Bezugszeichen bezeichnet ist, weist hierbei im Wesentlichen zwei senkrecht zu dem Abschnitt 950 verlaufende Zahnflanken auf, die die Förderflächen 330 bilden. Bei dem in Fig. 2 als Zahn 940 gekennzeichneten Zahn sind die beiden Förderflächen 330-1 und 330-2 durch eine Deckfläche 960 miteinander verbunden.

Wie im Zusammenhang mit Fig. 1 zuvor erläutert wurde, ist bei dem dort gezeigten Ausführungsbeispiel das Förderbauteil 340 mit dem Gehäuse 110, also dem Deckel der Kupplungsanordnung 100 über die Nietverbindung 350 verbunden. Zum Durchführen der Niete weist das Förderbauteil 340 an einigen der Abschnitte 950 entsprechende Öffnungen 970 auf, durch die die Nietverbindung mit dem Gehäuse 110 bzw. der zweiten Gehäuseschale 130 geschaffen wird. Genauer gesagt weist das in Fig. 2 gezeigte Förderbauteil hierbei insgesamt sechs Öffnungen 970 auf, die regelmäßig über den Umfang des Förderbauteils 340 verteilt sind. Selbstverständlich kann bei anderen Ausführungsbeispielen auch eine abweichende Anzahl von Öffnungen 970 implementiert sein, die regelmäßig oder auch unregelmäßig verteilt angeordnet sein können.

Das Förderbauteil 340 ist hierbei einstückig ausgebildet, ist also aus genau einem zusammenhängenden Materialstück gefertigt. Abgesehen von der Schaffung des Ausgangsmaterialstücks und der Öffnungen 970 ist hierbei das Förderbauteil 340 durch ein Umformen eines blechartigen Werkstücks hergestellt worden. Hierdurch kann eine vergleichsweise einfache und damit kostengünstige Herstellungsmethode verwendet werden. Bei anderen Ausführungsbeispielen, bei denen gegebenenfalls höhere Anforderungen an die Belastungen vorherrschen oder aber andere Randbedingungen ein anderes Herstellungsverfahren sinnvoller erscheinen lassen, können auch spanabhebende oder gusstechnische Herstellungsverfahren zur Schaffung des entsprechenden Förderbauteils 340 herangezogen werden.

Alternativ zu der in Fig. 2 gezeigten Ausführung kann ein Förderbauteil 340 auch auf Basis einer Mehrzahl von Förderbauteilsegmenten implementiert werden, die beispielsweise jeweils einstückig ausgeführt sein können. Unabhängig davon, wie genau das Förderbauteil 340 bei dem in Fig. 1 gezeigten Ausführungsbeispiel implementiert ist, kann dieses jedoch, die Funktionalität der Schaffung eines Stroms des flüssigen Mediums, also beispielsweise des Öls, mit dem Antrieb der Innenlamellen 270 über die gemeinsame Nutzung der Förderfläche 330 kombinieren. Hierdurch kann die Mitnahme der Lamellen 270 in einer Nasskupplung implementiert werden, ohne dass ein zusätzlicher Lamellenträger für die betreffenden Innenlamellen 270 vorgesehen werden muss. Das Förderbauteil 340 erfüllt hierbei gleichzeitig die Zusatzfunktion von Schaufeln zur Erzeugung des internen Ölkreislaufs. Kupplungsanordnungen 100 gemäß einem Ausführungsbeispiel können hierbei als Mehr-Lamellen-Kupplungen oder auch als Einscheibenkupplungen implementiert werden.

Die Mitnahme der Lamellen 270 wird hierbei bei der in Fig. 1 gezeigten Mehr-Lamellen-Kupplungsanordnung 100 mittels des mäanderförmigen Elements, nämlich dem Förderbauteil 340, realisiert. Das Förderbauteil 340 kann, wie in Fig. 2 gezeigt ist, als einteilige Lösung oder als mehrere Segmente implementiert sein. Die Förderflächen 330 erzeugen hierbei den internen Ölkreislauf, dienen jedoch gleichzeitig zur Lamellenmitnahme.

Wie in Fig. 1 gezeigt wurde, kann hierbei das Förderbauteil 340 motorseitig an dem Deckel des Gehäuses, also an der zweiten Gehäuseschale 130 mittels Nieten oder anderer Verbindungstechniken angebracht werden, um das Drehmoment des Motors auf die Lamellen 270 zu übertragen. Das in Fig. 1 gezeigte Ausführungsbeispiel stellt so eine Kupplungsanordnung 100 dar, bei der die Lamellenmitnahme deckelseitig angebracht ist. Hierbei können Kupplungsanordnungen 100 durchaus auch für hohe Drehmomente von mehreren Hundert Newtonmetern (Nm) zum Einsatz kommen. Jedoch können auch Kupplungsanordnungen 100 gemäß Ausführungsbeispielen implementiert werden, bei denen höhere, jedoch auch niedrigere maximale Drehmomente übertragbar sind.

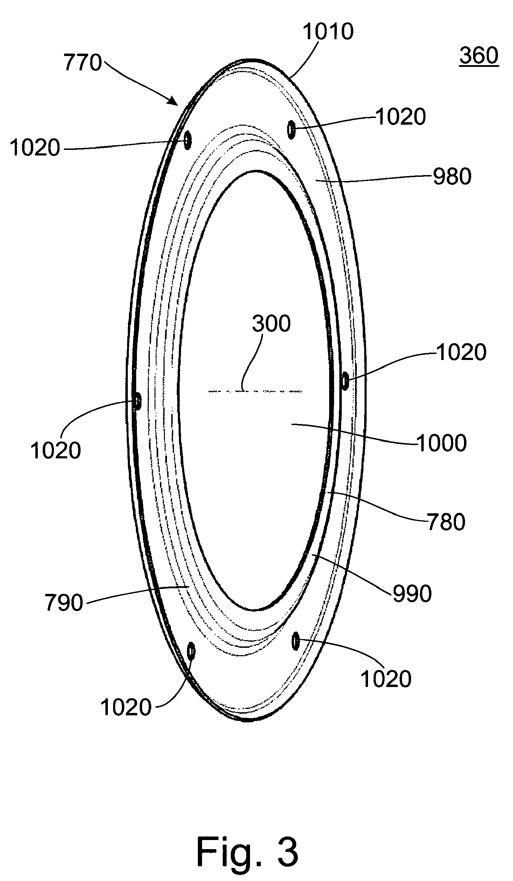

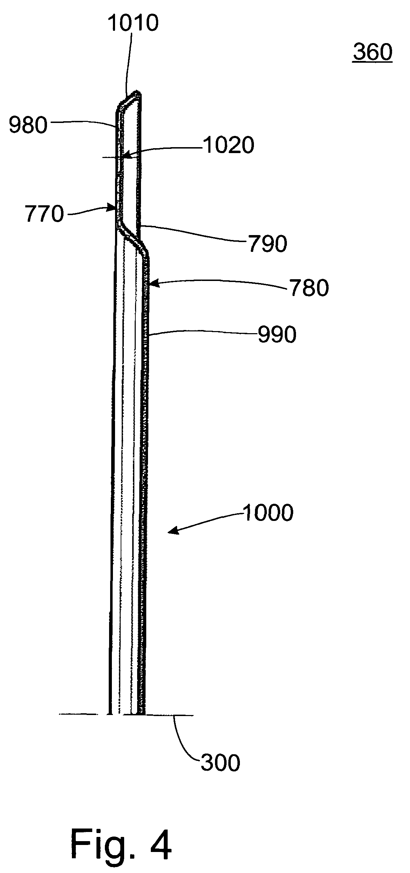

Fig. 3 zeigt eine perspektivische Darstellung des Dichtelements 360, wie es bei der Kupplungsanordnung 100 aus Fig. 1 zum Einsatz kommt. Fig. 4 zeigt eine entsprechende Querschnittsdarstellung durch das Dichtelement 360. Das Dichtelement 360 umfasst einen scheibenförmigen ersten Abschnitt 980, der an einer in Fig. 3 nicht gezeigten Oberfläche des Dichtelements 360 die erste Dichtfläche 770 umfasst.

Das Dichtelement 360 umfasst ferner einen scheibenförmigen zweiten Abschnitt 990, der die zweite Dichtfläche 780 umfasst bzw. die an einer Oberfläche des zweiten Abschnitts 990 gebildet ist. Die beiden Abschnitte 980, 990 sind hierbei im Wesentlichen senkrecht zu der Drehachse 300, also der axialen Richtung der Kupplungsanordnung 100 orientiert. Sie sind entlang der Drehachse sowohl axial beabstandet, wie auch senkrecht zu dieser radial versetzt angeordnet. Der erste Abschnitt 980 ist hierbei entlang der radialen Richtung vollständig außerhalb des zweiten Abschnitts 990 angeordnet. Bei anderen Ausführungsbeispielen kann hier natürlich auch eine abweichende Anordnung, beispielsweise mit einem teilweisen Überlapp entlang der radialen Richtung und/oder eine vertauschte Anordnung der ersten und zweiten Abschnitte implementiert sein.

Der erste und der zweite Abschnitt 980, 990 werden hierbei durch den Übergangsabschnitt 790 miteinander verbunden. Aufgrund der radialen und axialen Versetzung der beiden Abschnitte 980, 990 erstreckt sich dieser im Wesentlichen schräg zu der Drehachse 300, bildet jedoch aufgrund der im Wesentlichen rotationssymmetrischen Ausgestaltung des Dichtelements 360 eine kegelstumpfförmige Fläche des Dichtelements 360.

Das Dichtelement 360 weist darüber hinaus eine zentrale Ausnehmung 1000 auf, die symmetrisch zu der Drehachse 300 angeordnet ist. Der zweite Abschnitt 990 begrenzt hierbei die zentrale Ausnehmung 1000 nach außen.

Das Dichtelement 360 weist ferner an einem Rand des ersten Abschnitts 980 eine Randstruktur 1010 auf, die sich hinsichtlich ihrer Formgebung an die Form der zweiten Gehäuseschale 130 anpasst, und so eine wenigstens teilweise formschlüssige Verbindung entlang der radialen Richtung und der axialen Richtung, also entlang der Drehachse 300, schafft, durch die bei einer Montage das Dichtelement 360 ausrichtbar ist. Die Randstruktur 1010 ist hierbei gegenüber dem ersten Abschnitt 980 und dem zweiten Abschnitt 990 unter einem Winkel von etwa 40° angeordnet, kann jedoch bei anderen Ausführungsformen gegebenenfalls auch unter anderen Winkeln implementiert sein. Ebenso kann die Randstruktur 1010 auch anders ausgestaltet sein oder aber auch entfallen. Die Randstruktur 1010 kann hierbei alternativ oder ergänzend auch zur mechanischen Stabilisierung des Dichtelements 360 dienen, die diesem eine größere Formstabilität bei Deformation verleiht. So kann beispielsweise eine Wellung im Bereich der ersten Dichtfläche 770 in Umfangsrichtung auftreten, wenn das Anpresselement 620 betätigt wird. So kann die Form der Randstruktur 1010 auch von der der zweiten Gehäuseschale 130 abweichen. Selbstverständlich können jedoch bei anderen Ausführungsbeispielen die Randstruktur 1010 auch anders ausgeführt sein und/oder eine entsprechende Deformation durch andere strukturelle Maßnahmen unterbunden oder reduziert werden.

Bei dem in den Fig. 3 und 4 gezeigten Ausführungsbeispiel eines Dichtelements 360 sind hierbei ferner eine Mehrzahl von Löchern 1020 in dem ersten Abschnitt 980 vorgesehen, mit deren Hilfe das Dichtelement 360 an dem betreffenden Gegenbauteil, also im vorliegenden Fall an der zweiten Gehäuseschale 130, befestigbar ist. Die Löcher 1020 sind hierbei zur Schaffung einer Steck- und/oder Nietverbindung vorgesehen. Sie ermöglichen gerade die in Fig. 1 dargestellte Nietverbindung 350 mit der zweiten Gehäuseschale 130, also dem Gehäuse 110 zu erschaffen.

Der Übergangsabschnitt 790, der den ersten und den zweiten Abschnitt 980, 990 miteinander verbindet, trägt hierbei nicht zuletzt zu der bereits zuvor beschriebenen Federwirkung bzw. Federfunktionalität des Dichtelements 360 bei. Aufgrund der Befestigung des Dichtelements 360 mit der ersten Dichtfläche 770 an der zweiten Gehäuseschale 130 und dem Anliegen der zweiten Dichtfläche 780 an dem betreffenden Gegenbauteil bzw. weiteren Bauteil, bei dem es sich hier um das Anpresselement 620 handelt, wird bei einer axialen Bewegung des Anpresselements 620 nicht zuletzt der Übergangsbereich 790 deformiert. Dieser liefert daher nicht zuletzt die zuvor beschriebene Federkraft.

Lediglich der Vollständigkeit halber bietet es sich an, an dieser Stelle darauf hinzuweisen, dass die Anordnung der ersten und zweiten Dichtfläche 770, 780, wie sie in Fig. 3 gezeigt sind, bei anderen Ausführungsbeispielen eines Dichtelements 360 anders ausgeführt sein können. So können diese gegebenenfalls nicht an einander abgewandten Seiten des Dichtelements 360 angeordnet sein, sondern hinsichtlich einer Flächennormalen parallel orientiert sein. Auch können die entsprechenden Dichtflächen 770 und 780 jeweils hinsichtlich ihrer Orientierung entlang der Drehachse 300 vertauscht sein.

Das Dichtelement 360, wie es in den Fig. 3 und 4 gezeigt ist, kann so beispielsweise eine Lippendichtung und eine Tellerfeder ersetzen. Hierdurch kann nicht nur die Herstellung einer Kupplungsanordnung 100 gemäß einem Ausführungsbeispiel vereinfacht werden, es kann gegebenenfalls auch möglich sein, Bauraum im Inneren der Kupplungsanordnung 100 einzusparen und diese damit kleiner auszuführen. Es kann so gegebenenfalls der Bauraum für eine Lippendichtung oder ein zusätzlicher Ausgleichsraum eingespart werden.

Auch kann gegebenenfalls die Tellerfeder, Membranfeder oder Blattfeder eingespart werden bzw. ihre Funktionalität auch im Falle einer Kupplungsanordnung 100 implementiert werden, wenn für eine solche eigentlich kein Bauraum zur Verfügung stehen würde, ihre Funktionalität jedoch vorteilhaft wäre. Ein Dichtelement 360 gemäß einem Ausführungsbeispiel kann so auch als Rückdruckfeder verwendet werden.

Auch kann ein aufgrund einer Drehbewegung oder Relativdrehbewegung entstehender Druckunterschied zwischen dem Kolbenraum bzw. Kolbendruckraum 590 und dem benachbarten Volumen, im vorliegenden Fall dem zweiten Volumen 740, durch den Einsatz des Dichtelements 360 reduziert werden. Anders ausgedrückt kann gegebenenfalls eine Fliehkraftdruckerhöhung im Kolbendruckraum 590, die durch eine Drehung der Kupplungsanordnung 100 bewirkt wird, reduziert oder ausgeglichen werden.

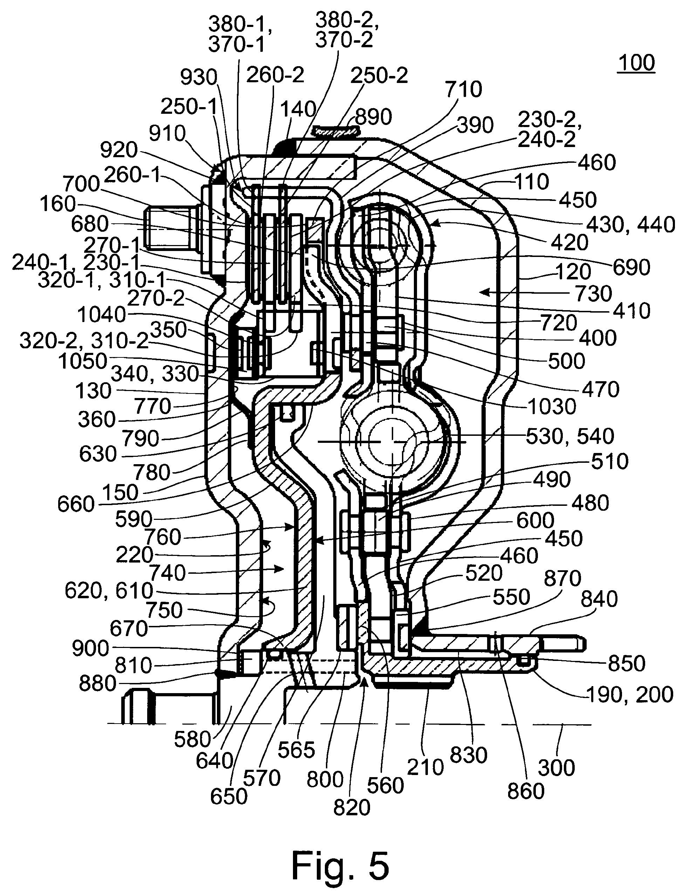

Fig. 5 zeigt ein entsprechendes Gesamtsystem einer Kupplungsanordnung 100 gemäß einem Ausführungsbeispiel, bei der das Förderbauteil 340 jedoch kolbenseitig befestigt ist.

So weist die Kupplungsanordnung 100 gemäß einem Ausführungsbeispiel, wie sie in Fig. 5 gezeigt ist, zwar auch weiterhin ein Dichtelement 360 auf, ist jedoch über seine Nietverbindung 350, welche das Dichtelement 360 mit der zweiten Gehäuseschale 130 (Deckel) verbindet, nicht mehr unmittelbar mit dem Förderbauteil 340 verbunden. Das Förderbauteil 340 ist vielmehr über eine Nietverbindung 1030 mit dem Anpresselement 620 formschlüssig und damit drehfest verbunden. Das Förderbauteil 340 kann so beispielsweise über weitere Nietverbindungen 1040 mit einer Mehrzahl von Blattfederelementen 1050 formschlüssig verbunden, wobei die Blattfederelemente 1050 als Teil des Dichtelements 360 ausgeführt sind. Das Förderbauteil 340 stellt so ein Beispiel eines weiteren Bauteils dar, das über das Dichtelement 360 mittelbar, im Wesentlichen drehfest mit dem Antriebsbauteil 150 gekoppelt ist.

Die Blattfederelemente 1050 sind hierbei durch eine Ausstellung des Materials des Dichtelements 360 ausgeformt und daher einstückig mit diesem gefertigt. Bei anderen Ausführungsbeispielen können jedoch die Blattfederelemente 1050 auch als separate Komponenten oder aber auch im Falle einer einstückigen Ausfertigung mit dem Dichtelement 360 mit Hilfe anderer Herstellungsverfahren gefertigt werden.

Da das Dichtelement 360 über die Nietverbindung 350 drehfest mit dem Deckel, also der zweiten Gehäuseschale 130, verbunden ist, ergibt sich so eine im Wesentlichen drehfeste Verbindung zwischen dem als Antriebsbauteil 150 dienenden Gehäuse 110 und dem Anpresselement 620. Das Dichtelement 360 stellt daher hier auch ein Verbindungsbauteil dar. Hierdurch ist das Anpresselement 620 im Vergleich zu der in Fig. 1 gezeigten Kupplungsanordnung 100 nun nicht mehr "frei" drehbar, sondern im Wesentlichen formschlüssig mit dem Gehäuse 110 verbunden. Auch bei einer abrupten Drehzahländerung ohne ein erneutes Einkuppeln der Kupplungsanordnung 100 kann daher eine entsprechende Geräuschentwicklung durch ein frei rotierendes Anpresselement 620 bei dieser Implementierung nicht auftreten.

Die Verbindung zwischen dem Anpresselement 620 und dem Gehäuse 110 kann hierbei nur im Wesentlichen drehfest sein, da beispielsweise aufgrund von Deformationen, thermischen Effekten oder aber aufgrund der durch die Blattfederelemente 1050 gegebenen geometrischen Verhältnisse bei einer axialen Verschiebung des Anpresselements 620 eine Verdrehung zwischen dem Anpresselement 620 und dem Gehäuse 110 auftreten kann. Unabhängig davon folgt bei dem hier gezeigten Ausführungsbeispiel das Anpresselement 620 jedoch der Drehbewegung des Gehäuses 110.

Bei der in Fig. 5 gezeigten Variante ist also das Förderbauteil 340 auf der Kolbenseite angebracht, wobei eine Verbindung zu der als Deckel dienenden zweiten Gehäuseschale 130 mittels der Blattfederelemente 1050 erfolgt, um das Drehmoment des Motors auf die Innenlamellen 270 über die Förderfläche 330 zu übertragen. Die Blattfedern oder Blattfederelemente 1050 schaffen so die Verbindung des Förderbauteils 340 zu der motorseitigen zweiten Gehäuseschale 130. Die Blattfederelemente 1050 stehen hierbei in das erste Volumen 720 hinein, sodass diese bei einer Drehung des Gehäuses 110 und damit einer Drehung des Förderbauteils 340 relativ zu dem flüssigen Medium im Inneren des Gehäuses 110 ebenfalls die Fluidförderung und damit die Schaffung des Stroms des Fluides unterstützen. Auch die Blattfederelemente 1050 sind so für die Öl-förderung unterstützend.

Auch wenn zuvor im Wesentlichen von Nietverbindungen 1030, 1040, 350 die Rede war, können jedoch auch andere Verbindungstechniken zur Schaffung der entsprechenden im Wesentlichen drehfesten Verbindung zwischen dem Gehäuse 110 und dem Förderbauteil 340 verwendet werden. So können die entsprechenden Nietverbindungen einzeln oder auch zusammen gegen eine andere Verbindungstechnik, beispielsweise eine Steckverbindung, jedoch auch gegen andere form-, kraft- und/oder stoffschlüssige Verbindungen getauscht oder durch solche ergänzt werden.

Auch kann bei einem entsprechenden Ausführungsbeispiel der Einsatz der Blattfederelemente 1050 gegen andere Bauteile ausgetauscht werden, sofern diese ebenfalls eine axiale Verlagerung des Anpresselements 620, also entlang der Drehachse 300, unterstützen oder zumindest jedoch nicht behindern.

Eine Kupplungsanordnung 100 ermöglicht so eine Lamellenmitnahme unter gleichzeitiger Bereitstellung einer Schaufelfunktion für ein flüssiges Medium, welches sich in dem Gehäuse 110 der Kupplungsanordnung 100 befinden kann. Kupplungsanordnungen 100 können so für unterschiedliche Kupplungsanwendungen vorgesehen werden, beispielsweise für Fahrzeuge mit einem im vorderen Bereich des Fahrzeugs eingebauten und quer zur Fahrtrichtung ausgebildeten Automatikgetriebe. Kupplungsanordnungen 100 gemäß einem Ausführungsbeispiel können so als Anfahrkupplungen, jedoch auch als Trennkupplungen im Zusammenhang mit synchronisierten Getrieben oder im Zusammenhang mit längs eingebauten Motoren verwendet werden. Als flüssiges Medium kann beispielsweise ein Öl dienen.

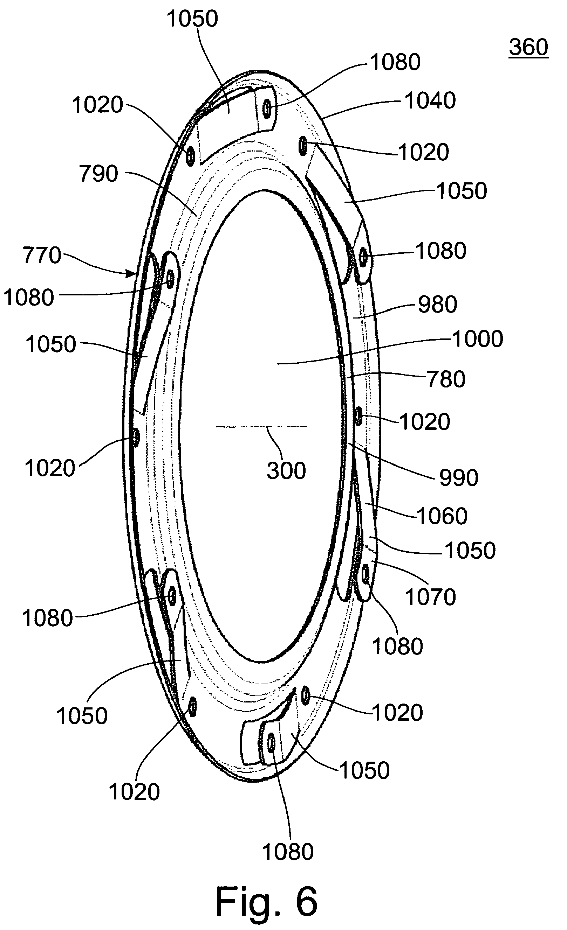

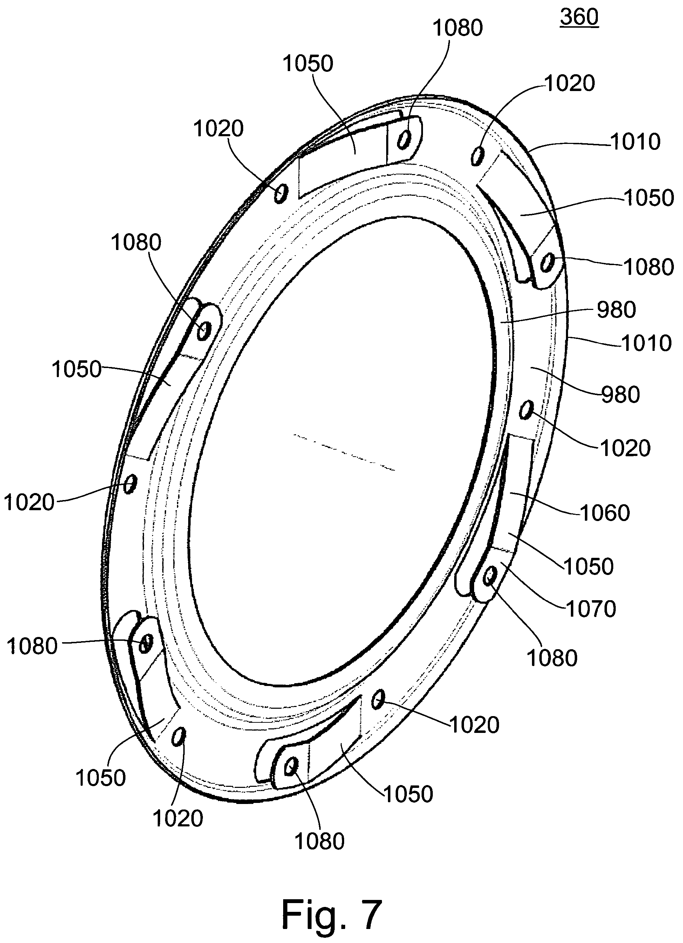

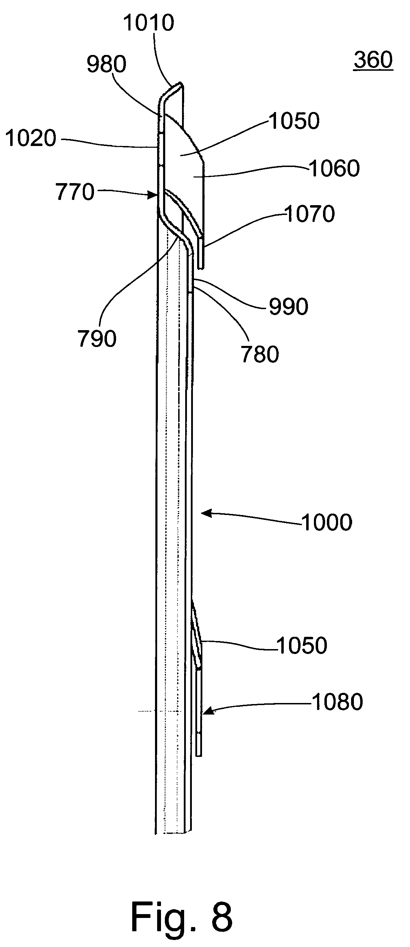

Die Fig. 6 und 7 zeigen perspektivische Darstellungen des Dichtelements 360 gemäß einem Ausführungsbeispiel, wie es bei der Kupplungsanordnung 100 aus Fig. 5 implementiert ist. Fig. 8 zeigt eine Fig. 4 entsprechende Querschnittsdarstellung des Dichtelements 360.

Wie bereits zuvor erläutert wurde, unterscheidet sich das Dichtelement 360 aus den Fig. 6 bis 8 im Wesentlichen von dem zuvor beschriebenen Dichtelement 360 dadurch, dass nunmehr in dem ersten Abschnitt 980 eine Mehrzahl von Blattfederelementen 1050 implementiert ist, die eine Drehmomentübertragung über das Dichtelement 360 ermöglichen. Die Blattfederelemente 1050 sind hierbei als Ausstellungen aus dem blechförmigen Material implementiert, aus dem auch das Dichtelement 360 gefertigt ist. Um ein Anliegen der Blattfederelemente an dem betreffenden weiteren Bauteil, also beispielsweise dem Förderbauteil 340, zu ermöglichen, weisen die Blattfedern 1050 jeweils einen schräg zu der Drehachse 300 verlaufenden Federabschnitt 1060 und einen Befestigungsabschnitt 1070 auf. Der Befestigungsabschnitt ist hierbei im Wesentlichen parallel zu dem ersten und zweiten Abschnitt 980, 990 und damit zu den beiden Dichtflächen 770, 780 orientiert.

Zur Schaffung der im Wesentlichen drehfesten Verbindung über das Dichtelement 360 weisen die Blattfederelemente 1050 in ihren Befestigungsabschnitten 1070 jeweils ein Loch 1080 auf, welches zur Schaffung einer formschlüssigen Verbindung zwischen dem Dichtelement 360 und dem entsprechenden weiteren Bauteil, also im vorliegenden Fall dem Förderbauteil 340, herangezogen werden kann. So ist, wie Fig. 5 auch gezeigt hat, das Loch 1080 zur Schaffung der weiteren Nietverbindung 1040 verwendet worden. Alternativ oder ergänzend können die Löcher 1080 auch zur Schaffung einer Steckverbindung herangezogen werden.

Die Fig. 6 bis 8 zeigen so ein Dichtblech mit integrierten Blattfedern, wobei die Fig. 6 und 7 dreidimensionale Darstellungen zeigen, während Fig. 8 das entsprechende Dichtblech mit den Blattfedern im Schnitt zeigt. Die Integration der Blattfedern bzw. Blattfederelemente 1050 ermöglicht so eine Drehmomentübertragung von dem motorseitig angeordneten Deckel, also der zweiten Gehäuseschale 130, zu dem Anpresselement 620 oder auch der Lamellenmitnahme, die bei dem vorliegenden Ausführungsbeispiel durch das Förderbauteil 340 realisiert wird.

Selbstverständlich können bei anderen Ausführungsbeispielen auch andere Formen einer Drehmomentübertragung implementiert werden. Ebenso können natürlich auch anders ausgeformte Blattfederelemente 1050 zum Einsatz kommen, bei denen beispielsweise der Federabschnitt 1060 sowie der Befestigungsabschnitt 1070 anders, gegebenenfalls ohne die entsprechenden Löcher 1080, implementiert sind. Auch kann es beispielsweise möglich sein, die Blattfederelemente 1050 zunächst an einem Außen- oder Innendurchmesser des Dichtelements 360 zu formen und diese im Rahmen eines Biegens um beispielsweise mehr als 120° nach innen umzuformen. Ebenso kann es gegebenenfalls möglich sein, über eine reibschlüssige Verbindung die entsprechende Drehmomentübertragung zu realisieren.

Ausführungsbeispiele eines Dichtelements 360 können so einen Fliehkraftausgleich an dem Anpresselement 620 erzeugen. Hierzu kann das Dichtelement 360 im Inneren der Anpresskupplung 100 gemäß einem Ausführungsbeispiel einen Fliehkraftausgleichsraum, also das zweite Volumen 740, von dem ersten Volumen 720 in dem vorhandenen Bauraum trennen. Das zweite Volumen 740, welches an die Kolbenrückseite 760 des Anpresselements 620 angrenzt, stellt aufgrund dieser geometrischen Anordnung den Fliehkraftausgleichsraum dar.

Durch Einstellung des Durchmessers zwischen dem motorseitig angebrachten Deckel und dem Dichtblech kann so im Grunde ein beliebiger Grad der Kompensation des Fliehkraftdrucks realisiert werden. So kann durch eine Versetzung des Übergangsbereichs zu radial kleineren Werten das zweite Volumen 740 verkleinert werden, sodass bei einem aufgrund der Zentrifugalkraft, die auf das dort befindliche flüssige Medium wirkt, auftretenden Drucks eine Krafteinwirkung auf das Anpresselement 620 reduziert wird. Ein in dem Kolbendruckraum 590 auftretender Druck steht diesem jedoch gegebenenfalls entgegen, sodass es zu einer Unterkompensation des Fliehkraftdrucks kommen kann. Andererseits kann durch eine Verschiebung des Übergangsbereichs zu größeren Radien eine entsprechende Vergrößerung des zweiten Volumens 740 erzielt werden, sodass die entsprechenden Kräfte, die auf das Anpresselement 620 einwirken, von dieser Seite vergrößert werden. Durch eine Einstellung des Dichtdurchmessers zwischen dem motorseitigen Deckel (zweite Gehäuseschale 130) und dem Dichtblech bzw. Dichtelement 360 kann so gegebenenfalls ein vollständiger Ausgleich, jedoch auch eine Über- oder Unterkompensation des Fliehkraftdrucks realisierbar sein.

Darüber hinaus kann das Dichtblech bzw. Dichtelement 360 auch die Funktion einer Rückdruckfeder übernehmen, wobei eine Einstellung der Rückdruckfederkraft durch eine gezielte Wahl der Durchmesser bzw. der Radien-Übergänge und weiterer geometrieabhängiger Parameter des Dichtelements 360 erfolgen kann. Auch kann eine Materialstärke des Dichtelements sowie andere Faktoren die Rückdruckfederkraft beeinflussen. Ein Ausführungsbeispiel eines Dichtblechs 360 kann im Inneren einer Kupplungsanordnung 100 gemäß einem Ausführungsbeispiel so gegebenenfalls als Blech zwischen dem Anpresselement 620 und dem motorseitigen Deckel, also der zweiten Gehäuseschale 130, erkennbar sein.

Die oben beschriebenen Ausführungsbeispiele stellen hierbei lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, wie anhand der Beschreibung und der Erläuterung der Ausführungsbeispiele hierin präsentiert wurden, beschränkt sei.

### Bezugszeichen

- 100: Kupplungsanordnung
- 110: Gehäuse
- 120: erste Gehäuseschale
- 130: zweite Gehäuseschale
- 140: Schweißverbindung
- 150: Antriebsbauteil
- 160: Anschweißschraube
- 180: Reibpaket
- 190: Abtriebsbauteil
- 200: untere Nabe
- 210: Innenverzahnung
- 220: Innenfläche
- 230: erste Reibfläche
- 240: zweite Reibfläche
- 250: Außenlamelle
- 260: Reibbelag
- 270: Innenlamelle
- 300: Drehachse
- 310: Abschnitt
- 320: Mitnehmerfläche
- 330: Förderfläche
- 340: Förderbauteil
- 350: Nietverbindung
- 360: Dichtelement
- 370: Abschnitt
- 380: weitere Mitnehmerfläche
- 390: Träger
- 400: Nietverbindung
- 410: erste Nabenscheibe
- 420: Schwingungsdämpfer
- 430: erstes Federelement
- 440: Schraubenfeder
- 450: erstes Abdeckblech
- 460: zweites Abdeckblech
- 470: Langloch
- 480: weitere Nietverbindung
- 490: Distanzstück
- 500: Distanzstück
- 510: Langloch
- 520: zweite Nabenscheibe
- 530: zweites Federelemente
- 540: Schraubenfeder
- 550: Lager
- 560: Abschnitt
- 565: weiteres Lager
- 570: Trennwand
- 580: vordere Nabe
- 590: Kolbendruckraum
- 600: Kolbenfläche
- 610: Kolben
- 620: Anpresselement
- 630: Dichtelement
- 640: Dichtelement
- 650: Zulaufbohrung
- 660: Dichtfläche
- 670: Dichtfläche
- 680: erste Anpressfläche
- 690: Nase
- 700: zweite Anpressfläche
- 710: Abschnitt
- 720: erstes Volumen
- 730: Teilvolumen
- 740: zweites Volumen
- 750: Oberflächenabschnitt
- 760: Kolbenrückseite
- 770: erste Dichtfläche
- 780: zweite Dichtfläche
- 790: Übergangsabschnitt
- 800: Zuleitungskanal
- 810: Zuführung
- 820: Zuflussbereich
- 830: Abflussbereich
- 840: Pumpennabe
- 850: Dichtelement
- 860: Öffnung
- 870: Verschweißung
- 880: Verschweißung
- 890: Wuchtgewicht
- 900: Distanzscheibe
- 910: ebener Abschnitt
- 920: Verschweißung
- 930: Ausnehmung
- 940: Zahn
- 950: Abschnitt
- 960: Deckfläche
- 970: Öffnung
- 980: erster Abschnitt
- 990: zweiter Abschnitt
- 1000: zentrale Ausnehmung
- 1010: Randstruktur
- 1020: Loch
- 1030: Nietverbindung
- 1040: weitere Nietverbindung
- 1050: Blattfederelement
- 1060: Federabschnitt
- 1070: Befestigungsabschnitt
- 1080: Loch

## Patentansprüche

1. Kupplungsanordnung (100), beispielsweise für einen Antriebsstrang eines Fahrzeugs, mit folgenden Merkmalen:
einer ersten Reibfläche (230);
einer zweiten Reibfläche (240), die mit einem Abtriebsbauteil (190) der Kupplungsanordnung (100) im Wesentlichen drehfest gekoppelt ist, wobei die erste und die zweite Reibfläche (230, 240) ausgebildet und angeordnet sind, um miteinander in einen Reibeingriff bringbar zu sein, um ein Drehmoment von der ersten Reibfläche (230) auf die zweite Reibfläche (240) übertragbar zu machen; und wobei die erste und die zweite Reibfläche (230, 240) ferner ausgebildet sind, um während eines Betriebs der Kupplungsanordnung (100) einem flüssigen Medium ausgesetzt zu sein;
einem Anpresselement (620), das ausgebildet ist, um auf eine Betätigung hin den Reibeingriff durch ein Bewirken einer Kraft entlang einer Kraftrichtung zu schaffen oder zu trennen; und
einem Dichtelement (360), das ein erstes Volumen (720), in dem die erste und die zweite Reibfläche (230, 240) angeordnet sind, von einem zweiten Volumen (740) trennt, wobei das Dichtelement (360) entlang der Kraftrichtung zwischen dem Anpresselement (620) und einem Gehäuse (110) der Kupplungsanordnung (100) angeordnet ist,
**dadurch gekennzeichnet, dass** das Dichtelement (360) ferner ausgebildet ist, um eine Kraft derart auf das Anpresselement (620) auszuüben, dass das Anpresselement (620) durch die Kraft auf eine Ausgangslage vor einer Betätigung desselben zu versetzt wird.

2. Kupplungsanordnung (100) nach Anspruch 1, bei der das Anpresselement (620) ausgebildet ist, um die Kraft entlang der Kraftrichtung durch eine Bewegung entlang der Kraftrichtung zu bewirken, und bei der das Dichtelement (360) derart verformbar ausgestaltet ist, dass das Dichtelement (360) einer Bewegung des Anpresselements (620) entlang der Kraftrichtung durch eine Deformation desselben nachgeben kann.

3. Kupplungsanordnung (100) nach einem der vorhergehenden Ansprüche, bei der das zweite Volumen (740) wenigstens teilweise von einem Flächenabschnitt des Anpresselements (620) begrenzt wird.

4. Kupplungsanordnung (100) nach Anspruch 3, bei der sich an einer dem zweiten Volumen (740) abgewandten Seite des Anpresselements (620) ein Kolbendruckraum (590) anschließt, wobei sich eine Erstreckung des Flächenabschnitts des Anpresselements (620) entlang einer radialen Richtung der Kupplungsanordnung (100) von einer Erstreckung des Kolbendruckraums (590) entlang der radialen Richtung um höchstens 30 % der größeren Erstreckung des Flächenabschnitts des Anpresselements und des Kolbendruckraums (590) unterscheidet

5. Kupplungsanordnung (100) nach einem der vorhergehenden Ansprüche, bei der das Anpresselement (620) derart ausgebildet ist, dass die Kraftrichtung einer Richtung einer Drehachse (300) der Kupplungsanordnung (100) entspricht.

6. Kupplungsanordnung (100) nach einem der vorhergehenden Ansprüchen, die ferner ein Förderbauteil (340) in dem ersten Volumen (720) umfasst, das mit dem Gehäuse (110) im Wesentlichen drehfest gekoppelt und ausgebildet ist, um einen Strom des flüssigen Mediums bei einer Drehung relativ zu dem flüssigen Medium zu bewirken.

7. Kupplungsanordnung (100) nach einem der vorhergehenden Ansprüchen, bei der das Dichtelement einen scheibenförmigen ersten Abschnitt (980) mit einer ersten Dichtfläche (770) und einen scheibenförmigen zweiten Abschnitt (990) mit einer zweiten Dichtfläche (780) aufweist, wobei der erste Abschnitt (980) und der zweite Abschnitt (990) durch einen Übergangsabschnitt (790) miteinander verbunden sind.

8. Kupplungsanordnung (100) nach Anspruch 7, bei der die erste Dichtfläche (770) und/oder die zweite Dichtfläche (780) entlang einer radialen Richtung eine Ausdehnung aufweist, die wenigstens 5 % einer Ausdehnung des Übergangsabschnitts (790) entlang der radialen Richtung entspricht, und/oder bei der die erste Dichtfläche (770) und/oder die zweite Dichtfläche (780) entlang einer radialen Richtung eine Ausdehnung aufweist, die größer als eine Ausdehnung des Übergangsabschnitts (790) entlang der radialen Richtung ist.

9. Kupplungsanordnung (100) nach einem der Ansprüche 7 oder 8, bei der die erste (770) und die zweite Dichtfläche (780) entlang einer radialen Richtung zueinander versetzt und/oder entlang einer Drehachse (300) der Kupplungsanordnung (100) versetzt zueinander angeordnet sind.

10. Kupplungsanordnung (100) nach einem der vorhergehenden Ansprüche, bei der das Dichtelement (360) einstückig ausgebildet ist.

11. Kupplungsanordnung (100) nach einem der vorhergehenden Ansprüche, bei der das Dichtelement (360) durch ein Umformen eines blechartigen Werkstücks, durch ein spanabhebendes oder ein gusstechnisches Herstellungsverfahren hergestellt ist.

12. Kupplungsanordnung (100) nach einem der vorhergehenden Ansprüche, bei der das Dichtelement (360) im Wesentlichen drehfest, beispielsweise durch eine Nietverbindung (350) und/oder eine Steckverbindung, mit dem Gehäuse (110) verbunden und ausgebildet ist, um eine im Wesentlichen drehfeste Verbindung zwischen dem Gehäuse (110) und einem weiteren Bauteil (340) zu schaffen.

13. Kupplungsanordnung (100) nach Anspruch 12, bei dem das Dichtelement (360) eine Mehrzahl von Blattfederelementen (1050) aufweist, die mit dem weiteren Bauteil (340) der Kupplungsanordnung (100) formschlüssig, beispielsweise durch eine Nietverbindung (1030) und/oder eine Steckverbindung, verbunden sind, um die im Wesentlichen drehfeste Verbindung zwischen dem weiteren Bauteil (340) und dem Gehäuse (110) zu schaffen.

14. Dichtelement (360) für eine Kupplungsanordnung (100) mit folgenden Merkmalen:
ein scheibenförmiger erster Abschnitt (980), der eine erste Dichtfläche (770) umfasst;
ein scheibenförmiger zweiter Abschnitt (990), der eine zweite Dichtfläche (780) umfasst;
ein Übergangsabschnitt (790), der den ersten Abschnitt (980) und den zweite Abschnitt (990) miteinander verbindet;
wobei die erste Dichtfläche (770) ausgebildet ist, um mit einem ringförmigen ersten Oberflächenabschnitt eines Bauteils und die zweite Dichtfläche (780) mit einem ringförmigen zweiten Oberflächenabschnitt des Bauteils oder eines anderen Bauteils in Kontakt zu stehen;
wobei das Dichtelement (360) ausgebildet ist, um eine fluidtechnische Dichtung zu schaffen; und
wobei das Dichtelement (360) ausgebildet ist, um eine Kraft derart auf ein Anpresselement (620) der Kupplungsanordnung (100) auszuüben, dass das Anpresselement (620) durch die Kraft auf eine Ausgangslage vor einer Betätigung desselben zu versetzt wird, um einen Reibschluss zur Drehmomentübertragung zwischen der ersten (230) und der zweiten Reibfläche (240) zu schaffen oder zu trennen.

## Claims

1. Clutch arrangement (100), for example for a drive train of a vehicle, having the following features:
a first friction face (230);
a second friction face (240) which is coupled in a substantially fixed manner in terms of rotation to an output component (190) of the clutch arrangement (100), the first and the second friction face (230, 240) being configured and arranged so as to be capable of being brought into a frictional engagement with one another, in order to make it possible to transmit a torque from the first friction face (230) to the second friction face (240); and, furthermore, the first and the second friction face (230, 240) being configured to be exposed to a liquid medium during operation of the clutch arrangement (100);
a pressing element (620) which is configured to provide or to disconnect the frictional engagement upon an actuation by way of an action of a force along a force direction; and
a sealing element (360) which separates a first volume (720), in which the first and the second friction face (230, 240) are arranged, from a second volume (740), the sealing element (360) being arranged along the force direction between the pressing element (620) and a housing (110) of the clutch arrangement (100),
**characterized in that**, furthermore, the sealing element (360) is configured to exert a force on the pressing element (620) in such a way that the pressing element (620) is displaced by way of the force towards a starting position before an actuation of the said pressing element (620).

2. Clutch arrangement (100) according to Claim 1, in which the pressing element (620) is configured to bring about the force along the force direction by way of a movement along the force direction, and in which the sealing element (360) is configured such that it can be deformed in such a way that the sealing element (360) can yield to a movement of the pressing element (620) along the force direction by way of a deformation of the said sealing element (360).

3. Clutch arrangement (100) according to either of the preceding claims, in which the second volume (740) is delimited at least partially by a surface section of the pressing element (620).

4. Clutch arrangement (100) according to Claim 3, in which a side of the pressing element (620) which faces away from the second volume (740) is adjoined by a piston pressure space (590), an extent of the surface section of the pressing element (620) along a radial direction of the clutch arrangement (100) differing from an extent of the piston pressure space (590) along the radial direction by at most 30% of the greater extent of the surface section of the pressing element and the piston pressure space (590).

5. Clutch arrangement (100) according to one of the preceding claims, in which the pressing element (620) is configured in such a way that the force direction corresponds to a direction of a rotational axis (300) of the clutch arrangement (100).

6. Clutch arrangement (100) according to one of the preceding claims, which comprises, furthermore, a delivery component (340) in the first volume (720), which delivery component (340) is coupled in a substantially fixed manner in terms of rotation to the housing (110) and is configured to bring about a flow of the liquid medium in the case of a rotation relative to the liquid medium.

7. Clutch arrangement (100) according to one of the preceding claims, in which the sealing element has a disc-shaped first section (980) with a first sealing face (770) and a disc-shaped second section (990) with a second sealing face (780), the first section (980) and the second section (990) being connected to one another by way of a transition section (790).

8. Clutch arrangement (100) according to Claim 7, in which the first sealing face (770) and/or the second sealing face (780) have/has an extent along the radial direction which corresponds to at least 5% of an extent of the transition section (790) along the radial direction, and/or in which the first sealing face (770) and/or the second sealing face (780) have/has an extent along the radial direction which is greater than an extent of the transition section (790) along the radial direction.

9. Clutch arrangement (100) according to either of Claims 7 and 8, in which the first (770) and the second sealing face (780) are arranged offset with respect to one another along the radial direction and/or offset with respect to one another along a rotational axis (300) of the clutch arrangement (100).

10. Clutch arrangement (100) according to one of the preceding claims, in which the sealing element (360) is configured in one piece.

11. Clutch arrangement (100) according to one of the preceding claims, in which the sealing element (360) is manufactured by way of shaping of a sheet-like workpiece, by way of a machining manufacturing method or by way of a casting manufacturing method.

12. Clutch arrangement (100) according to one of the preceding claims, in which the sealing element (360) is connected fixedly to the housing (110) so as to rotate with it, for example by way of a riveted connection (350) and/or a plugged connection, and is configured to provide a substantially fixed connection in terms of rotation between the housing (110) and a further component (340).

13. Clutch arrangement (100) according to Claim 12, in which the sealing element (360) has a plurality of leaf spring elements (1050) which are connected to the further component (340) of the clutch arrangement (100) in a positively locking manner, for example by way of a riveted connection (1030) and/or a plugged connection, in order to provide the substantially fixed connection in terms of rotation between the further component (340) and the housing (110).

14. Sealing element (360) for a clutch arrangement (100) having the following features:
a disc-shaped first section (980) which comprises a first sealing face (770);
a disc-shaped second section (990) which comprises a second sealing face (780);
a transition section (790) which connects the first section (980) and the second section (990) to one another;
the first sealing face (770) being configured to be in contact with an annular first surface section of a component and the second sealing face (780) being configured to be in contact with an annular second surface section of the component or another component;
the sealing element (360) being configured to provide a fluidic seal; and
the sealing element (360) being configured to exert a force on a pressing element (620) of the clutch arrangement (100) in such a way that the pressing element (620) is displaced by way of the force towards a starting position before an actuation of the said pressing element (620), in order to provide or to disconnect a frictional connection for the transmission of torque between the first (230) and the second friction face (240).

## Revendications

1. Ensemble d'embrayage (100), par exemple pour une chaîne cinématique d'un véhicule, présentant les caractéristiques suivantes:
une première face de friction (230);
une deuxième face de friction (240), qui est essentiellement calée en rotation avec un composant de sortie (190) de l'ensemble d'embrayage (100), dans lequel la première et la deuxième faces de friction (230, 240) sont configurées et disposées pour pouvoir être amenées en engagement de friction l'une avec l'autre afin qu'un couple de rotation puisse être transmis de la première face de friction (230) à la deuxième face de friction (240); et dans lequel la première et la deuxième faces de friction (230, 240) sont en outre configurées pour pouvoir être exposées à un milieu liquide pendant un fonctionnement de l'ensemble d'embrayage (100);
un élément de pression (620), qui est configuré pour, suite à un actionnement d'enclenchement, créer l'engagement de friction par une action d'une force le long d'une direction de force, ou pour le séparer; et
un élément d'étanchéité (360), qui sépare un premier volume (720), dans lequel la première et la deuxième faces de friction (230, 240) sont disposées, d'un deuxième volume (740), dans lequel l'élément d'étanchéité (360) est disposé le long de la direction de force entre l'élément de pression (620) et un boîtier (110) de l'ensemble d'embrayage (100),
**caractérisé en ce que** l'élément d'étanchéité (360) est en outre configuré pour exercer une force sur l'élément de pression (620), de telle manière que l'élément de pression (620) soit déplacé vers une position initiale avant un actionnement de celui-ci.

2. Ensemble d'embrayage (100) selon la revendication 1, dans lequel l'élément de pression (620) est configuré pour provoquer la force le long de la direction de force par un déplacement le long de la direction de force, et dans lequel l'élément d'étanchéité (360) est déformable, de telle manière que l'élément d'étanchéité (360) puisse céder, par une déformation de ce dernier, lors d'un déplacement de l'élément de pression (620) le long de la direction de force.

3. Ensemble d'embrayage (100) selon l'une quelconque des revendications précédentes, dans lequel le deuxième volume (740) est limité au moins partiellement par une partie de surface de l'élément de pression (620).

4. Ensemble d'embrayage (100) selon la revendication 3, dans lequel une chambre de pression de piston (590) se raccorde à un côté de l'élément de pression (620) situé à l'opposé du deuxième volume (740), dans lequel une extension de la partie de surface de l'élément de pression (620) le long d'une direction radiale de l'ensemble d'embrayage (100) se différencie d'une extension de la chambre de pression de piston (590) le long de la direction radiale au maximum de 30 % de la plus grande extension de la partie de surface de l'élément de pression et de la chambre de pression de piston (590).

5. Ensemble d'embrayage (100) selon l'une quelconque des revendications précédentes, dans lequel l'élément de pression (620) est configuré de telle manière que la direction de force corresponde à une direction d'un axe de rotation (300) de l'ensemble d'embrayage (100).

6. Ensemble d'embrayage (100) selon l'une quelconque des revendications précédentes, qui comprend en outre un composant de transport (340) dans le premier volume (720), qui est essentiellement calé en rotation avec le boîtier (110) et qui est configuré pour provoquer un courant du milieu liquide lors d'une rotation par rapport au milieu liquide.

7. Ensemble d'embrayage (100) selon l'une quelconque des revendications précédentes, dans lequel l'élément d'étanchéité présente une première partie en forme de disque (980) avec une première face d'étanchéité (770) et une deuxième partie en forme de disque (990) avec une deuxième face d'étanchéité (780), dans lequel la première partie (980) et la deuxième partie (990) sont reliées l'une à l'autre par une partie de transition (790) .

8. Ensemble d'embrayage (100) selon la revendication 7, dans lequel la première face d'étanchéité (770) et/ou la deuxième face d'étanchéité (780) présente, le long d'une direction radiale, une extension qui correspond au moins à 5 % d'une extension de la partie de transition (790) le long de la direction radiale, et/ou dans lequel la première face d'étanchéité (770) et/ou la deuxième face d'étanchéité (780) présente, le long d'une direction radiale, une extension qui est plus grande qu'une extension de la partie de transition (790) le long de la direction radiale.

9. Ensemble d'embrayage (100) selon l'une des revendications 7 ou 8, dans lequel la première (770) et la deuxième (780) faces d'étanchéité sont décalées l'une par rapport à l'autre le long d'une direction radiale et/ou sont décalées l'une par rapport à l'autre le long d'un axe de rotation (300) de l'ensemble d'embrayage (100).

10. Ensemble d'embrayage (100) selon l'une quelconque des revendications précédentes, dans lequel l'élément d'étanchéité (360) est réalisé en une seule pièce.

11. Ensemble d'embrayage (100) selon l'une quelconque des revendications précédentes, dans lequel l'élément d'étanchéité (360) est fabriqué par une déformation d'une pièce en tôle, par un procédé de fabrication par enlèvement de copeaux ou par une technique de coulée.

12. Ensemble d'embrayage (100) selon l'une quelconque des revendications précédentes, dans lequel l'élément d'étanchéité (360) est assemblé au boîtier (110) de façon essentiellement calée en rotation, par exemple par un assemblage rivé (350) et/ou un assemblage par embrochage, et est configuré pour créer une liaison essentiellement calée en rotation entre le boîtier (110) et un autre composant (340).

13. Ensemble d'embrayage (100) selon la revendication 12, dans lequel l'élément d'étanchéité (360) présente une multiplicité d'éléments de ressort à lame (1050), qui sont assemblés par emboîtement, par exemple par un assemblage rivé (1030) et/ou par embrochage, à l'autre composant (340) de l'ensemble d'embrayage (100), afin de créer l'assemblage essentiellement calé en rotation entre l'autre composant (340) et le boîtier (110).

14. Elément d'étanchéité (360) pour un ensemble d'embrayage (100), présentant les caractéristiques suivantes:
une première partie en forme de disque (980), qui comprend une première face d'étanchéité (770);
une deuxième partie en forme de disque (990), qui comprend une deuxième face d'étanchéité (780);
une partie de transition (790), qui relie l'une à l'autre la première partie (980) et la deuxième partie (990);
dans lequel la première face d'étanchéité (770) est configurée pour être en contact avec une première partie de surface annulaire d'un composant et la deuxième face d'étanchéité (780) est configurée pour être en contact avec une deuxième partie de surface annulaire du composant ou d'un autre composant;
dans lequel l'élément d'étanchéité (360) est configuré pour créer une étanchéité en termes de technique des fluides; et
dans lequel l'élément d'étanchéité (360) est configuré pour exercer une force sur un élément de pression (620) de l'ensemble d'embrayage (100), de telle manière que l'élément de pression (620) soit déplacé par la force vers une position initiale avant un actionnement de ce dernier, afin de créer ou de séparer un engagement de friction pour la transmission de couple de rotation entre la première (230) et la deuxième (240) faces de friction.
